# EUROPEAN PATENT SPECIFICATION

(11) **EP 4 510 660 B1**
(45) Date of publication and mention of the grant of the patent: **04.11.2026**
(21) Application number: 23818827.0
(22) Date of filing: 17.04.2023
(51) Int. Cl.: H04W 8/22, H04L 65/1016, H04L 65/1069, H04L 41/0813, H04L 41/0806, H04L 41/5041, H04L 41/0853, H04L 43/065, H04W 8/18, H04W 8/24

(54) **CONFIGURATION MANAGEMENT METHOD FOR ON-CARD CONFIGURATION CHARACTERISTICS, AND ELECTRONIC DEVICE**
KONFIGURATIONSVERWALTUNGSVERFAHREN FÜR ON-CARD-KONFIGURATIONSEIGENSCHAFTEN UND ELEKTRONISCHE VORRICHTUNG
PROCÉDÉ DE GESTION DE CONFIGURATION POUR DES CARACTÉRISTIQUES DE CONFIGURATION SUR CARTE ET DISPOSITIF ÉLECTRONIQUE

(30) Priority: 06.06.2022 CN 202210630997
(43) Date of publication of application: 19.02.2025
(73) Proprietor: Honor Device Co., Ltd., Shenzhen, Guangdong 518040 (CN)
(72) Inventor: LI, Haibo, Shenzhen, Guangdong 518040 (CN); XIONG, Zheng, Shenzhen, Guangdong 518040 (CN)
(74) Representative: MERH-IP Matias Erny Reichl Hoffmann Patentanwälte PartG mbB
(86) International application number: PCT/CN2023/088680
(87) International publication number: WO 2023/236659

(56) References cited:
- CN-A- 103 581 889
- CN-A- 106 851 610
- CN-A- 107 682 194
- CN-A- 112 533 193
- KR-A- 20090 056 277
- US-A1- 2016 029 204
- US-A1- 2018 352 421
- US-A1- 2019 215 681
- US-A1- 2019 380 024
- US-A1- 2021 105 665

## Description

### TECHNICAL FIELD

This application relates to the field of wireless communication technologies, and in particular, to a configuration management method for an on-card configuration characteristic, wherein the first on-card configuration characteristic is whether an enhanced voice service EVS encoding mode is supported, and an electronic device.

### BACKGROUND

Whether a terminal device can process data of a communication service depends on whether the terminal device supports a communication characteristic corresponding to the communication service. For example, in a 5G communication system, a terminal device supporting a VONR (Voice On New Radio, VONR) characteristic can process VONR service data, and a terminal device not supporting the VONR characteristic cannot process the VONR service data. Whether the terminal device supports a communication characteristic depends on a related configuration.

Some communication characteristics need to be configured with a communication operator, and may be understood as being configured with a SIM card. In other words, when the terminal device uses a SIM card corresponding to the operator, the communication characteristics may be activated. How to manage configurations of these communication characteristics in a unified manner is a problem to be resolved.

US2016/029204A1 discloses that a general purpose processor of a UE 200 is configured to select the target set of configuration routines based on the values of the one or more parameters read from the SIM when the UE receiving at least one SIM, and the general purpose processor is subsequently configured to configure (or reconfigure) the UE based on the selected target set of configuration routines. US2019/380024A1 discloses an upper layer service at the MODEM end completing a different VOLTE network registration via acquiring the corresponding ID value of an inserted SIM card and sets an NVRAM parameter on a bottom layer to complete a different VOLTE network registration when update needed.

### SUMMARY

To resolve the foregoing technical problem, embodiments of this application provide a configuration management method for an on-card configuration characteristic, and an electronic device. In the method, terminal on-card characteristic configurations are managed based on an application processor in a unified manner, so that there is no need to separately perform configuration for each operator, and there is no need to separately perform code adaptation for each chip platform, which is highly convenient.

The invention is as defined by the appended claims. There is provided a configuration management method performed by an electronic device, a corresponding electronic device, chip and a computer-readable storage medium. Any further reference to "embodiment" or "aspect" or "example" is solely for the purpose of better understanding of the invention.

According to a first example that is not encompassed by the claims but useful for understanding the invention, an embodiment of this application provides an electronic device. The electronic device includes:
a plurality of processors, where the processor includes an application processor AP and a modem processor Modem;
a memory; and
one or more computer programs, where the one or more computer programs are stored in the memory, and when the computer programs are executed by the one or more processors, the electronic device is enabled to perform the following operations:
obtaining, by the AP of the electronic device, a configuration state of a first on-card configuration characteristic on the Modem side in response to a state of inserting a SIM card, where the configuration state is a first state; obtaining, by the AP, an expected state of the first on-card configuration characteristic, where the expected state is a second state; and when the first state is inconsistent with the second state, indicating, by the AP, the Modem to adjust the configuration state of the first on-card configuration characteristic to the second state, where the configuration state of the first on-card configuration characteristic indicates electronic device capability information that needs to be reported to a network side.

In this way, terminal on-card characteristic configurations are managed based on the application processor in a unified manner, so that there is no need to separately perform configuration for each operator, and there is no need to separately perform code adaptation for each chip platform, which is highly convenient.

According to the first example, the first on-card configuration characteristic is related to a core network service capability. Correspondingly, when the computer programs are executed by the one or more processors, the electronic device is enabled to perform the following operations:
after the AP indicates the Modem to adjust the configuration state of the first on-card configuration characteristic to the second state, in response to a user operation received, determining, by the electronic device, capability information based on the second state, and reporting the capability information to the network side, where the user operation is used for initiating a first service.

For example, the first service may be a voice service, or may be a data service.

For example, after the configuration state of the first on-card configuration characteristic is adjusted to the second state, if the second state is being supported, the capability information determined by the electronic device based on the second state includes a capability corresponding to the first on-card configuration characteristic. An example in which the first on-card configuration characteristic is whether an encoding mode 1 is supported is used. If the second state is being supported, the capability information determined by the electronic device based on the second state includes the encoding mode 1.

For another example, after the configuration state of the first on-card configuration characteristic is adjusted to the second state, if the second state is being not supported, the capability information determined by the electronic device based on the second state does not include a capability corresponding to the first on-card configuration characteristic. An example in which the first on-card configuration characteristic is whether an encoding mode 1 is supported is used. If the second state is being not supported, the capability information determined by the electronic device based on the second state does not include the encoding mode 1.

For still another example, after the configuration state of the first on-card configuration characteristic is adjusted to the second state, if the second state is being enabled, in the capability information determined by the electronic device based on the second state, a field value (for example, "1") corresponding to the first on-card configuration characteristic represents an enabled state. If the second state is being not enabled, in the capability information determined by the electronic device based on the second state, a field value (for example, "0") corresponding to the first on-card configuration characteristic represents a disabled state.

In this way, when the configuration state of the first on-card configuration characteristic on the Modem side is consistent with the expected state, the AP no longer indicates the Modem to adjust the configuration state of the first on-card configuration characteristic. In this case, if a user initiates a related service, the electronic device determines capability information based on the configuration state of the first on-card configuration characteristic on the Modem side, and reports the capability information to the network side. When the configuration state of the first on-card configuration characteristic on the Modem side is inconsistent with the expected state, the AP indicates the Modem to adjust the configuration state of the first on-card configuration characteristic. In this case, if a user initiates a related service, the electronic device determines capability information based on the adjusted configuration state of the first on-card configuration characteristic on the Modem side, and reports the capability information to the network side.

According to the first example or any implementation of the first example, when the computer programs are executed by the one or more processors, the electronic device is enabled to perform the following operations:
obtaining, by the AP, system version information and/or area information of the electronic device; and querying, by the AP, the expected state of the first on-card configuration characteristic based on the system version information and/or the area information.

In this way, if the configuration state of the first on-card configuration characteristic on the Modem side is inconsistent with the expected state corresponding to the system version information and/or the area information, the AP indicates the Modem to adjust the configuration state of the first on-card configuration characteristic, so that the configuration state is consistent with the expected state. In this way, based on the terminal AP side, terminal on-card characteristic configurations can be conveniently managed in a unified manner. In addition, based on the terminal AP side, terminal on-card characteristic configurations in different countries or regions can be managed in a unified manner, or on-card characteristic configurations for terminals with different versions can be managed in a unified manner.

According to the first example or any implementation of the first example, the first on-card configuration characteristic is related to a radio access capability. Correspondingly, when the computer programs are executed by the one or more processors, the electronic device is enabled to perform the following operations: generating, by the electronic device when accessing the network side, capability information based on the first state, and reporting the capability information to the network side; and after the AP indicates the Modem to adjust the configuration state of the first on-card configuration characteristic to the second state, updating, by the electronic device, the capability information based on the second state, and reporting updated capability information to the network side.

In this way, when the electronic device access the network side, the electronic device may generate capability information based on the configuration state of the first on-card configuration characteristic, and report the capability information to the network side. When the configuration state of the first on-card configuration characteristic on the Modem side is consistent with the expected state, the AP no longer indicates the Modem to adjust the configuration state of the first on-card configuration characteristic. In this case, the electronic device does not need to update the capability information related to the first on-card configuration characteristic. When the configuration state of the first on-card configuration characteristic on the Modem side is inconsistent with the expected state, the AP indicates the Modem to adjust the configuration state of the first on-card configuration characteristic. In this case, the electronic device needs to update the capability information based on the adjusted configuration state of the first on-card configuration characteristic on the Modem side, and reports updated capability information to the network side again.

According to the first example or any implementation of the first example, when the computer programs are executed by the one or more processors, the electronic device is enabled to perform the following operations: obtaining, by the AP, the configuration state of the first on-card configuration characteristic from an XmL file on the Modem side.

According to the first example or any implementation of the first example, when the computer programs are executed by the one or more processors, the electronic device is enabled to perform the following operations: when the computer programs are executed by the one or more processors, the electronic device is enabled to perform the following operations: obtaining, by the AP, the expected state of the first on-card configuration characteristic on the AP side.

According to the first example or any implementation of the first example, the first on-card configuration characteristic is related to a radio access capability, and the first on-card configuration characteristic is whether voice on new radio VONR is supported or whether voice over LTE VOLTE is supported.

According to the first example or any implementation of the first example, the first on-card configuration characteristic is related to a core network service capability, and the first on-card configuration characteristic is whether an enhanced voice service EVS encoding mode is supported.

According to the first example or any implementation of the first example, the first on-card configuration characteristic is an on-card configuration characteristic that the AP is interested.

According to the first example or any implementation of the first example, when the computer programs are executed by the one or more processors, the electronic device is enabled to perform the following operations: configuring, by the Modem in response to the state of inserting the SIM card, a state of each on-card configuration characteristic based on a configuration requirement corresponding to the SIM card.

According to the first example or any implementation of the first example, when the computer programs are executed by the one or more processors, the electronic device is enabled to perform the following operations: in response to the state of inserting the SIM card, configuring, by the Modem, the state of each on-card configuration characteristic based on the configuration requirement corresponding to the SIM card when operator information of the SIM card is inconsistent with historical card insertion information, where the historical card insertion information indicates operator information of a SIM card most recently inserted by a user.

In this way, when the operator information of a SIM card does not change, the Modem side does not need to repeatedly configure the state of the terminal on-card characteristic. This avoids a waste of resources.

According to the first example or any implementation of the first example, when the computer programs are executed by the one or more processors, the electronic device is enabled to perform the following operations: in response to the state of inserting the SIM card, obtaining, by the AP, the configuration state of the first on-card configuration characteristic on the Modem side when the operator information of the SIM card is inconsistent with the historical card insertion information.

In this way, when the operator information of a SIM card does not change, the Modem side does not need to repeatedly configure the state of the terminal on-card characteristic, and the AP side does not need to determine whether the state of the on-card characteristic meets expectations. This reduces unnecessary interaction between the AP and the Modem, and avoids a waste of resources.

According to the first example or any implementation of the first example, the electronic device is a dual-card device, and the Modem includes a first Modem and a second Modem. Correspondingly, when the computer programs are executed by the one or more processors, the electronic device is enabled to perform the following operations:
obtaining, by the AP, a first configuration state of the first on-card configuration characteristic on the first Modem side in response to a state of inserting a first SIM card for the first Modem, where the first configuration state is the first state, and when the first state is inconsistent with the second state, indicating the first Modem to adjust the first configuration state to the second state; and
obtaining, by the AP, a second configuration state of the first on-card configuration characteristic on the second Modem side in response to a state of inserting a second SIM card for the second Modem, where the second configuration state is the first state, and when the first state is inconsistent with the second state, indicating the second Modem to adjust the second configuration state to the second state.

According to a first aspect, an embodiment of this application provides a configuration management method for an on-card configuration characteristic. The method is applied to an electronic device, where the electronic device includes an application processor AP and a modem processor Modem. The method includes:
obtaining, by the AP of the electronic device, a configuration state of a first on-card configuration characteristic on the Modem side in response to a state of inserting a SIM card, where the configuration state is a first state; obtaining, by the AP, an expected state of the first on-card configuration characteristic stored on the AP side, where the expected state specifies whether the EVS encoding mode on-card configuration characteristic is supported, the expected state is obtained by the AP by quering based on system version information and/or area information of the electronic device, and the expected state is a second state; and where the area information is usage areas set in the electronic device or areas in which the electronic device is located; and when the first state is inconsistent with the second state, indicating, by the AP, the Modem to adjust the configuration state of the first on-card configuration characteristic to the second state, where the configuration state of the first on-card configuration characteristic indicates electronic device capability information that needs to be reported to a network side.

Therein, the first on-card configuration characteristic is related to a core network service capability. Correspondingly, after the AP indicates the Modem to adjust the configuration state of the first on-card configuration characteristic to the second state, the method further includes: in response to a user operation received, determining, by the electronic device, capability information based on the second state, and reporting the capability information to the network side, where the user operation is used for initiating a first service.

Therein, the obtaining, by the AP, an expected state of the first on-card configuration characteristic may include: obtaining, by the AP, system version information and/or area information of the electronic device; and querying, by the AP, the expected state of the first on-card configuration characteristic based on the system version information and/or the area information.

According to the first aspect or any implementation of the first aspect, the first on-card configuration characteristic is related to a radio access capability. Correspondingly, the method further includes: generating, by the electronic device when accessing the network side, capability information based on the first state, and reporting the capability information to the network side; and after the indicating, by the AP, the Modem to adjust the configuration state of the first on-card configuration characteristic to the second state, the method further includes: updating, by the electronic device, the capability information based on the second state, and reporting updated capability information to the network side.

According to the first aspect or any one implementation of the first aspect, the obtaining, by the AP, a configuration state of a first on-card configuration characteristic on the Modem side may include: obtaining, by the AP, the configuration state of the first on-card configuration characteristic from an XmL file on the Modem side.

According to the first aspect or any one implementation of the first aspect, the obtaining, by the AP, an expected state of the first on-card configuration characteristic may include: obtaining, by the AP, the expected state of the first on-card configuration characteristic on the AP side.

According to the first aspect or any implementation of the first aspect, the first on-card configuration characteristic is related to a radio access capability, and the first on-card configuration characteristic is whether VONR is supported or whether VOLTE is supported.

According to the first aspect, the first on-card configuration characteristic is related to a core network service capability, and the first on-card configuration characteristic is whether an EVS encoding mode is supported.

According to the first aspect or any implementation of the first aspect, the first on-card configuration characteristic is an on-card configuration characteristic that the AP is interested.

According to the first aspect or any one implementation of the first aspect, the method further includes: configuring, by the Modem in response to the state of inserting the SIM card, a state of each on-card configuration characteristic based on a configuration requirement corresponding to the SIM card.

According to the first aspect or any one implementation of the first aspect, the configuring, by the Modem in response to the state of inserting the SIM card, a state of each on-card configuration characteristic based on a configuration requirement corresponding to the SIM card may include: in response to the state of inserting the SIM card, configuring, by the Modem, the state of each on-card configuration characteristic based on the configuration requirement corresponding to the SIM card when operator information of the SIM card is inconsistent with historical card insertion information, where the historical card insertion information indicates operator information of a SIM card most recently inserted by a user.

According to the first aspect or any one implementation of the first aspect, the obtaining, by the AP of the electronic device, a configuration state of a first on-card configuration characteristic on the Modem side in response to a state of inserting a SIM card may include: in response to the state of inserting the SIM card, obtaining, by the AP, the configuration state of the first on-card configuration characteristic on the Modem side when the operator information of the SIM card is inconsistent with the historical card insertion information.

According to the first aspect or any implementation of the first aspect, the electronic device is a dual-card device, and the Modem includes a first Modem and a second Modem; and the method includes:
obtaining, by the AP, a first configuration state of the first on-card configuration characteristic on the first Modem side in response to a state of inserting a first SIM card for the first Modem, where the first configuration state is the first state, and when the first state is inconsistent with the second state, indicating the first Modem to adjust the first configuration state to the second state; and
obtaining, by the AP, a second configuration state of the first on-card configuration characteristic on the second Modem side in response to a state of inserting a second SIM card for the second Modem, where the second configuration state is the first state, and when the first state is inconsistent with the second state, indicating the second Modem to adjust the second configuration state to the second state.

The first aspect and any implementation of the first aspect respectively correspond to the first example and any implementation of the first example. For technical effects of the first aspect and any implementation of the first aspect, refer to the technical effects corresponding to the first example and any implementation of the first example. Details are not described herein again.

According to a second aspect, an embodiment of this application provides an electronic device. The electronic device comprises a plurality of processors, wherein the processor comprises an application processor AP and a modem processor Modem; a memory; and one or more computer programs, wherein the one or more computer programs are stored in the memory, and when the computer programs are executed by the one or more processors, the electronic device is enabled to perform the method of any one of the first aspect.

According to a third aspect, an embodiment of this application provides a chip. The chip includes a processing circuit and a transceiver pin. The transceiver pin and the processing circuit communicate with each other via an internal connection path. The processing circuit performs the configuration management method for an on-card configuration characteristic according to the first example or any implementation of the first example, to control a receive pin to receive a signal, and control a send pin to send a signal.

The third aspect and any implementation of the third aspect respectively correspond to the first aspect and any implementation of the first aspect. For technical effects of the third aspect and any implementation of the third aspect, refer to the technical effects corresponding to the first aspect and any implementation of the first aspect. Details are not described herein again.

According to a second example that is not encompassed by the claims but useful for understanding the invention, an embodiment of this application provides a computer program product, including a computer program. When the computer program is run, a computer is enabled to perform the configuration management method for an on-card configuration characteristic according to the first aspect or any implementation of the first aspect.

The second example and any implementation of the second example respectively correspond to the first aspect and any implementation of the first aspect. For technical effects of the second example and any implementation of the second exmaple, refer to the technical effects corresponding to the first aspect and any implementation of the first aspect. Details are not described herein again.

According to a fourth aspect, an embodiment of this application provides a computer-readable storage medium. The computer-readable storage medium includes a computer program. When the computer program is run on an electronic device, the electronic device is enabled to perform the configuration management method for an on-card configuration characteristic according to the first aspect and any implementation of the first aspect.

The fourth aspect and any implementation of the fourth aspect respectively correspond to the first aspect and any implementation of the first aspect. For technical effects of the fourth aspect and any implementation of the fourth aspect, refer to the technical effects corresponding to the first aspect and any implementation of the first aspect. Details are not described herein again.

### BRIEF DESCRIPTION OF DRAWINGS

FIG. 1 is an example of a diagram of a system architecture of cellular mobile communication;
FIG. 2 is an example of a manner for configuring a characteristic of cellular mobile communication;
FIG. 3 is an example of a schematic flowchart of configuring an on-card characteristic;
FIG. 4 is an example of a diagram of a management problem in on-card characteristic configuration;
FIG. 5 is an example of a diagram of a structure of hardware of an electronic device;
FIG. 6 is an example of a diagram of a structure of software of an electronic device;
FIG. 7 is a schematic flowchart of configuring an on-card characteristic according to an embodiment of this application;
FIG. 8 is a diagram of module interaction according to an embodiment of this application;
FIG. 9 is an example of diagram of adjusting a configuration on an on-card characteristic;
FIG. 10 is a diagram of module interaction according to an embodiment of this application;
FIG. 11 is a diagram of module interaction according to an embodiment of this application;
FIG. 12 is a diagram of module interaction according to an embodiment of this application;
FIG. 13 is a diagram of module interaction according to an embodiment of this application;
FIG. 14 is an example of a diagram of comparison of application scenarios.

### DESCRIPTION OF EMBODIMENTS

The following clearly and completely describes the technical solutions in embodiments of this application with reference to the accompanying drawings in embodiments of this application. Apparently, the described embodiments are some rather than all of embodiments of this application. All other embodiments obtained by a person skilled in the art based on embodiments of this application without creative efforts shall fall within the protection scope of this application.

The term "and/or" used herein describes only an association relationship for describing associated objects and represents that three relationships may exist. For example, A and/or B may represent the following three cases: Only A exists, both A and B exist, and only B exists.

In the specification and claims in embodiments of this application, the terms such as "first" and "second" are intended to distinguish between different objects, but do not indicate a particular order of the objects. For example, a first target object and a second target object are intended to distinguish between different target objects, but do not indicate a particular order of the target objects.

In embodiments of this application, the term such as "exemplarily" or "for example" is used to represent giving an example, an illustration, or a description. Any embodiment or design scheme described as "exemplary" or "for example" in embodiments of this application should not be explained as being more preferable or having more advantages than other embodiments or design schemes. Exactly, the terms such as "exemplary" or "for example" are intended to present related concepts in a specific manner.

In the descriptions of embodiments of this application, unless otherwise stated, "a plurality of" means two or more. For example, a plurality of processing units means two or more processing units. "A plurality of systems" means two or more systems.

The technical solutions provided in embodiments of this application are applicable to a 3G communication system, a 4G communication system, a 5G communication system, a communication system above 5G, and a subsequent evolved communication system supporting a 3rd generation partnership project (3rd Generation Partnership Project, 3GPP) protocol version, for example, a CDMA (Code Division Multiple Access, CDMA) system, a WCDMA (Wideband Code Division Multiple Access, WCDMA) system, a CDMA (Code Division Multiple Access, CDMA) 2000 system, a TD-SCDMA (Time Division-Synchronization Code Division Multiple Access, TD-SCDMA) system, an LTE (Long Term Evolution, LTE) system, an FDD (Frequency Division Duplex, FDD)-LTE system, and a 5G NR (New Radio, NR) system.

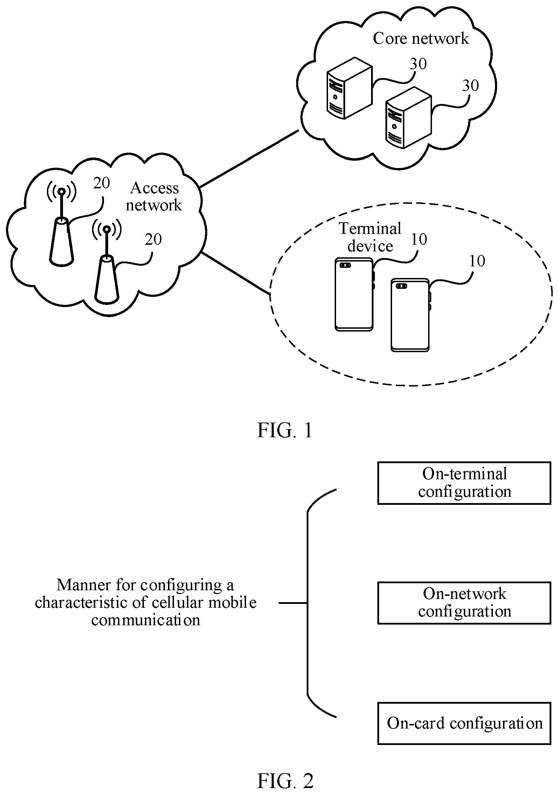

FIG. 1 is an example of a diagram of a system architecture of cellular mobile communication. As shown in FIG. 1, the system architecture may include a terminal device 10, an access network device 20, and a core network device 30.

The terminal device 10 may be a UE (User Equipment, UE), for example, a smartphone, a tablet computer, a notebook computer, a smart wearable device, or a PDA (Personal Digital Assistant, PDA). The terminal device 10 may alternatively be a wireless communication device such as an access terminal, a subscriber unit, a subscriber station, a mobile station, a mobile console, a remote station, or a remote terminal. This is not limited in embodiments of this application.

The access network device 20 is a device deployed in an access network and configured to provide a wireless communication function for the terminal device 10. The access network device 20 may include macro base stations, micro base stations, relay stations, and access points in various forms. In systems using different radio access technologies, names of devices having a function of the access network device may vary. For example, in a 5G NR system, the device may be referred to as a gNodeB or a gNB. With the evolution of communication technologies, a name of the "access network device" may change. For ease of description, the foregoing apparatuses that provide the wireless communication function for the terminal device 10 may be collectively referred to as an access network device.

The core network device 30 is a device that can provide functions such as session management, mobility relationships, policy management, and security authentication for the terminal device 10. For example, the core network device 30 may include a first core network device and a second core network device. The first core network device is responsible for access management and mobility management of the terminal device 10, and the second core network device is responsible for session management of the terminal device 10. Optionally, in the 5G NR system, the first core network device may implement an AMF (Access and Mobility Management Function, AMF), and the second core network device may implement an SMF (Session Management Function, SMF).

Using the 5G NR system as an example, the system architecture may include: a UE, a radio access network (Radio Access Network, RAN), a 5G core network (5G core network, 5GC), and a data network (Data Network, DN). The terminal device may be connected to the radio access network deployed by an operator through the wireless air interface, then connected to the data network through a core network, and use various services provided by the 5GC.

A communication characteristic (or a communication function) of the UE needs to be preconfigured, and is reported to a network side in a radio access process or when a core network service is initiated. As shown in FIG. 2, common manners for configuring a communication characteristic include: on-terminal configuration, on-network configuration, and on-card configuration.

The on-terminal configuration means that a related communication characteristic is configured when the terminal device leaves the factory. For example, a voice call characteristic of a tablet computer is preconfigured when the tablet computer leaves the factory.

The on-network configuration means that a communication characteristic is configured when the terminal device is connected to a network. For example, a roaming characteristic of a mobile terminal is configured after the mobile terminal registers with a PLMN (Public Land Mobile Network, PLMN) in a roaming list. If the mobile terminal roams and registers with a PLMN having a 5G capability, the roaming characteristic of the mobile terminal is 5G roaming.

The on-card configuration may also be understood as on-communication operator configuration. After a SIM (Subscriber Identification Module, SIM) card is inserted, the terminal device detects a communication operator to which the SIM card belongs, and completes configuration of a related communication characteristic based on a configuration requirement matching the communication operator. For example, if a configuration requirement of a communication operator for a communication characteristic A is being activated (or enabled or supported), when a SIM of the communication operator is installed in the terminal device, the communication characteristic A of the terminal device is configured to be in an activated state (or an enabled state or a supported state). For example, the communication characteristic (or referred to as a communication function) of the on-card configuration may be whether VONR is supported, whether an EVS (Enhanced Voice Services, EVS) encoding mode is supported, whether VoLTE is supported, or the like.

The on-card configuration is a mainstream manner for configuring a communication characteristic of the terminal device.

In an implementation, communication characteristic configuration requirement information corresponding to each communication operator is prestored in a Modem (Modem processor) of the terminal device. For example, communication characteristic configuration requirement information corresponding to a communication operator 1 is stored in an Xml file 1, communication characteristic configuration requirement information corresponding to a communication operator 2 is stored in an Xml file 2, and so on. Each Xml file may include configuration requirements of a communication operator for a plurality of communication characteristics, and configuration requirements of different communication operators for a same communication characteristic vary.

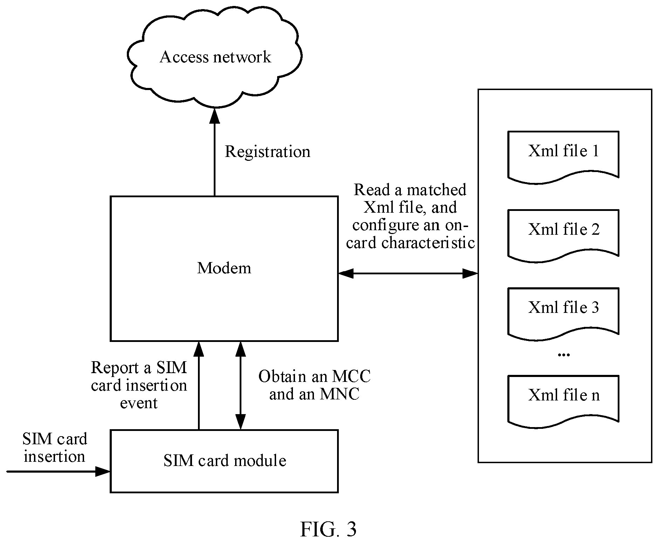

Refer to FIG. 3. After a SIM card is inserted into a SIM card module of a terminal device, the SIM card module identifies a communication operator to which the SIM card belongs, that is, identifies an MCC (Mobile Country Code, MCC) and an MNC (Mobile Network Code, MNC) of the SIM card, and reports a SIM card insertion event to a Modem. After receiving the SIM card insertion event, the Modem obtains the MCC and the MNC of the SIM card, and reads an Xml file matching the MCC and the MNC. In this way, the Modem configures a related communication characteristic of the terminal device based on communication characteristic configuration requirement information in the Xml file. For example, assuming that the communication operator to which the inserted SIM card belongs is the communication operator 1, the Modem configures a related communication characteristic of the terminal device based on the communication characteristic configuration requirement information in the Xml file 1.

For example, default communication characteristic configuration requirement information may further be prestored in the Modem of the terminal device, and is stored in an Xml file m. It is assumed that there is no communication characteristic configuration requirement information corresponding to a communication operator m in the Modem of the terminal device. When the communication operator to which the inserted SIM card belongs is the communication operator m, the Modem may configure a related communication characteristic of the terminal device based on communication characteristic configuration requirement information in a default Xml file.

In another implementation, a communication characteristic configuration requirement table is prestored in the Modem of the terminal device. For example, for the communication characteristic configuration requirement table, refer to Table 1. As shown in Table 1, communication characteristic configuration requirement information respectively corresponding to different communication operators may be recorded in the communication characteristic configuration requirement table, and the default communication characteristic configuration requirement information may be further recorded. After a SIM card is inserted into the SIM card module of the terminal device, the SIM card module identifies an MCC and an MNC of the SIM card. After obtaining the MCC and the MNC of the SIM card, the Modem queries, based on the MCC and the MNC, the communication characteristic configuration requirement table for matched communication characteristic configuration requirement information, and then configures a related communication characteristic of the terminal device based on the queried communication characteristic configuration requirement information. For example, assuming that the communication operator to which the inserted SIM card belongs is the communication operator 1, the Modem configures a related communication characteristic of the terminal device based on communication characteristic configuration requirement information that is in the communication characteristic configuration requirement table and that matches the communication operator 1. For another example, assuming that the communication operator to which the inserted SIM card belongs is the communication operator m, the Modem does not query the communication characteristic configuration requirement table for matched communication characteristic configuration requirement information. In this case, a related communication characteristic of the terminal device may be configured based on the default communication characteristic configuration requirement information.

After the related communication characteristic of the terminal device is configured, the Modem registers with an access network, to complete a network residing operation by the terminal device.

**Table 1**

| | Operator 1 | Operator 2 | Operator 3 | Operator 4 | ... | Operator n | Default |
|---|---|---|---|---|---|---|---|
| Configuration location | 1.Xml | 2. Xml | 3. Xml | 4.Xml | ... | n.Xml | m.Xml |
| MCCMNC | XXXXXX | XXXXXX | XXXXXX | XXXXXX | ... | XXXXXX | |
| Characteristic A | Enabled | Enabled | Not enabled | Not enabled | ... | Enabled | Enabled |
| Characteristic B | Supported | Supported | Not supported | Supported | ... | Not supported | Not supported |
| Characteristic C | Not enabled | Not enabled | Enabled | Not enabled | ... | Not enabled | Enabled |
| ... | ... | ... | ... | ... | ... | ... | ... |

Because basic code provided by chip manufacturers is the same, when a chip leaves the factory, some communication characteristics are configured by default based on a requirement of a communication operator. If a terminal manufacturer needs to adjust a communication characteristic, the terminal manufacturer needs to separately perform configuration for each communication operator. Currently, there are up to 80 communication operators around the world, which is inconvenient for unified adjustment. For example, a communication characteristic corresponding to each communication operator is configured in a corresponding Xml file.

In addition, the chip manufacturer does not provide an interface for the terminal Modem side to adjust communication characteristics in a unified manner. Even if the chip manufacturer provides the interface for the terminal Modem side to adjust communication characteristics in a unified manner, the terminal manufacturer also needs to adapt to different chip platforms separately, which is still inconvenient for unified adjustment. In addition, even if the communication characteristics are adjusted on the terminal Modem side, adjustment cannot be performed for terminals with different versions (or referred to as terminal system versions) or in different areas (usage areas set in the terminal or areas in which the terminal is located) in a targeted manner.

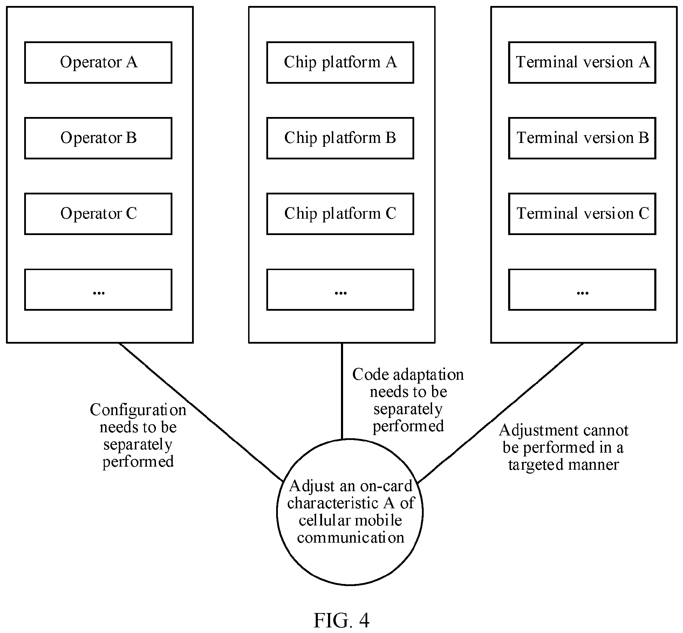

Refer to FIG. 4. An example in which a terminal manufacturer needs to adjust a communication characteristic A is used. Communication needs to be separately performed for each communication operator (an operator A, an operator B, an operator C, or the like). Even if each chip platform (a chip platform A, a chip platform B, a chip platform C, or the like) provides an interface for a Modem side to adjust communication characteristics in a unified manner, a terminal manufacturer also needs to separately perform code adaptation for each chip platform when adjusting the communication characteristic A.

Chips of terminal devices with different versions or in different areas may belong to a same chip platform. For example, chips of terminal devices with versions A and B belong to the chip platform A. In addition, chips of terminal devices with a same version or in a same area may alternatively belong to different chip platforms. For example, chips of terminal devices with a version A belong to the chip platform A or the chip platform B. Based on the above, even if adjustment is performed by the Modem side based on the interface provided by the chip platform, adjustment cannot be performed only for terminal devices with a specific version (such as the terminal version A, the terminal version B, or the terminal version C), and adjustment cannot be performed only for terminal devices in a specific area.

For example, if the terminal manufacturer needs to configure a characteristic B of the terminal device with the version A to be not supported, a developer needs to separately preconfigure, for the terminal device with the version A, communication characteristic configuration requirement information (refer to Table 2) that can match each communication operator, or even needs to separately develop code and specially maintain the code for the terminal device with the version A. It can be learned that more terminal versions with special requirements indicate a larger workload of the developer.

**Table 2**

| | Operator 1 | Operator 2 | Operator 3 | Operator 4 | ... | Operator n | Default |
|---|---|---|---|---|---|---|---|
| Configuration location | 1.Xml | 2.Xml | 3.Xml | 4.Xml | ... | n.Xml | m.Xml |
| MCCMNC | XXXXXX | XXXXXX | XXXXXX | XXXXXX | ... | XXXXXX | |
| Characteristic A | Enabled | Enabled | Not enabled | Not enabled | ... | Enabled | Enabled |
| Characteristic B | Not supported | Not supported | Not supported | Not supported | ... | Not supported | Not supported |
| Characteristic C | Not enabled | Not enabled | Enabled | Not enabled | ... | Not enabled | Enabled |
| ... | ... | ... | ... | ... | ... | ... | ... |

Based on the above, how to conveniently manage a status of configuring on-card configuration characteristics of terminal devices in a unified and targeted manner is a problem that needs to be resolved. The on-card configuration characteristic is a terminal communication characteristic applicable to on-card configuration. In the following descriptions, the on-card configuration characteristic is briefly referred to as an on-card characteristic.

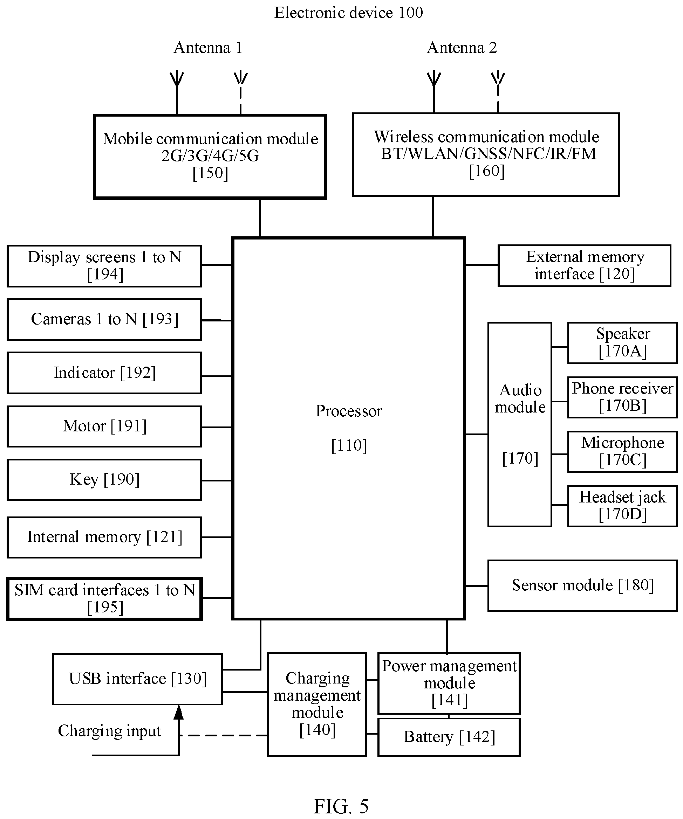

FIG. 5 is a diagram of a structure of an electronic device 100. Optionally, the electronic device 100 may be referred to as a terminal, or may be referred to as a terminal device. This is not limited in this application. It is to be noted that, the diagram of the structure of the electronic device 100 is applicable to the UE mentioned above. It should be understood that the electronic device 100 shown in FIG. 5 is only an example of the electronic device, and the electronic device 100 may have more or fewer components than those shown in the figure, may combine two or a plurality of components, or may have a different component configuration. Various components shown in FIG. 5 may be implemented in hardware including one or more signal processing circuits or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a headset jack 170D, a sensor module 180, a key 190, a motor 191, an indicator 192, a camera 193, a display screen 194, a subscriber identity module (subscriber identification module, SIM) card interface 195, and the like. The sensor module 180 may include a pressure sensor, a gyro sensor, an acceleration sensor, a temperature sensor, a motion sensor, a barometric pressure sensor, a magnetic sensor, a distance sensor, an optical proximity sensor, a fingerprint sensor, a touch sensor, an ambient light sensor, a bone conduction sensor, and the like.

The processor 110 may include one or more processing units. For example, the processor 110 may include an application processor (application processor, AP), a modem processor (Modem), a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, or may be used for data transmission between the electronic device 100 and a peripheral device, or may be configured to connect to a headset, to play audio by using the headset.

The charging management module 140 is configured to receive a charging input from a charger. The charger may be a wireless charger or a wired charger. When charging the battery 142, the charging management module 140 may supply power to the electronic device by using the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, an external memory, a display screen 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be configured in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium- and high-frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the phone receiver 170B, and the like), or displays an image or a video through the display screen 194. In some embodiments, the modem processor may be an independent device. In some other embodiments, the modem processor may be independent of the processor 110, and the modem processor and the mobile communication module 150 or another function module may be disposed in a same component.

The wireless communication module 160 may provide a solution to wireless communication applied to the electronic device 100, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which at least one communication processing module is integrated. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 may communicate with a network and another device by using a wireless communication technology.

The electronic device 100 may implement a display function by using the GPU, the display screen 194, the application processor, and the like. The processor 110 may include one or more GPUs, which execute program instructions to generate or change display information. The display screen 194 is configured to display an image, a video, and the like. The electronic device 100 can implement a photographing function by using the ISP, the camera 193, the video codec, the GPU, the display screen 194, the application processor, and the like. The camera 193 is configured to capture a static image or a video.

The external memory interface 120 may be configured to connect to an external storage card, for example, a micro SD card, to expand a storage capability of the electronic device 100.

The internal memory 121 may be configured to store computer executable program code, and the executable program code includes instructions. The processor 110 runs the instructions stored in the internal memory 121, to perform various function applications and data processing of the electronic device 100, to enable the electronic device 100 to implement a configuration management method for an on-card configuration characteristic in embodiments of this application.

The electronic device 100 may implement an audio function by using the audio module 170, the speaker 170A, the phone receiver 170B, the microphone 170C, the headset jack 170D, the application processor, and the like, for example, a function such as music playback and sound recording.

The audio module 170 is configured to convert digital audio information into an analog audio signal output, and is further configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. Music can be listened to or a hands-free call can be answered by using the speaker 170A in the electronic device 100. The phone receiver 170B, also referred to as an "earpiece", is configured to convert an audio electrical signal into a sound signal. When the electronic device 100 is used to answer a call or receive voice information, the phone receiver 170B may be put close to a human ear, to receive the voice information. The microphone 170C, also referred to as a "mouthpiece" or a "megaphone", is configured to convert a sound signal into an electrical signal. When making a call or sending voice information, a user may speak with the mouth approaching the microphone 170C, to input a sound signal to the microphone 170C. The headset jack 170D is configured to connect to a wired headset.

The pressure sensor is configured to sense a pressure signal, and can convert the pressure signal into an electrical signal. In some embodiments, the pressure sensor may be arranged in the display screen 194. The electronic device 100 may also calculate a touch location based on a detection signal of the pressure sensor.

The touch sensor is also referred to as a "touch panel". The touch sensor may be disposed on the display screen 194, and the touch sensor and the display screen 194 form a touchscreen, which is also referred to as a "touch screen". The touch sensor is configured to detect a touch operation performed on or near the touch sensor. The touch sensor may transfer the detected touch operation to the application processor, to determine a touch event type.

The key 190 includes a power key (or referred to as a power-on key), a volume key, and the like. The key 190 may be a mechanical key, or may be a touch-type key. The electronic device 100 may receive a key input, and generate a key signal input related to user setting and function control of the electronic device 100.

The motor 191 may generate a vibration prompt. The motor 191 may be configured to provide a vibration prompt for an incoming call, and may be further configured to provide a touch vibration feedback. For example, touch operations performed on different applications (for example, photo taking and audio playing) may correspond to different vibration feedback effects.

The indicator 192 may be an indicator light, and may be configured to indicate a charging state or a battery change, or may be further configured to indicate a message, a missed call, a notification, or the like.

The SIM card interface 195 is configured to connect to a SIM card. The SIM card may be inserted into the SIM card interface 195 or plugged from the SIM card interface 195, to come into contact with or be separated from the electronic device 100. The electronic device 100 may support one or N SIM card interfaces. N is a positive integer greater than 1. The SIM card interface 195 can support a nano SIM card, a micro SIM card, a SIM card, and the like. A plurality of cards may be inserted into a same SIM card interface 195 at the same time. The plurality of cards may be of the same type or different types. The SIM card interface 195 may further be compatible with different types of SIM cards. The SIM card interface 195 may also be compatible with an external memory card. The electronic device 100 interacts with a network by using a SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

In this embodiment of this application, the SIM card is configured to store user information, for example, an IMSI (International Mobile Subscriber Identification, IMSI) code. The user information stored in the SIM card may be used as an identity of the electronic device 100. Further, the electronic device 100 may use the identity to initiate a call to another terminal by using various voice solutions, and perform audio and video communication after the another terminal accepts the call.

A software system of the electronic device 100 may use a layered architecture, an event-driven architecture, a microkernel architecture, a micro service architecture, or a cloud architecture. In an embodiment of this application, an Android system with a layered architecture is used as an example to describe a software structure of the electronic device 100.

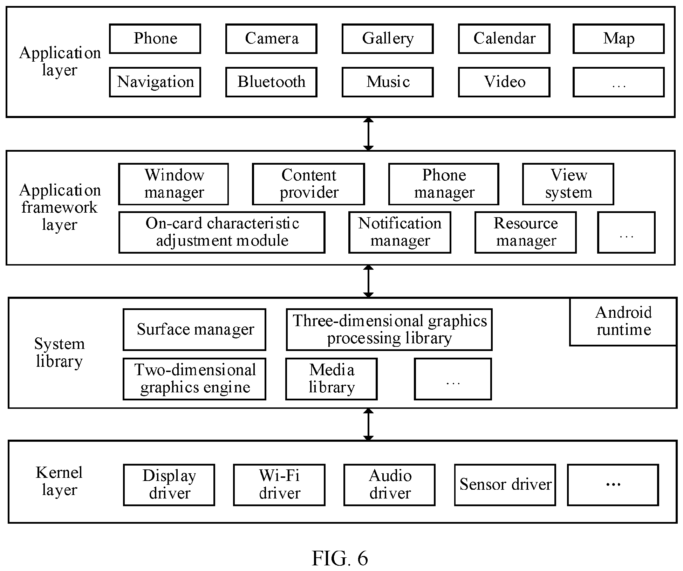

FIG. 6 is a block diagram of a software structure of the electronic device 100 according to an embodiment of this application.

In a layered architecture of the electronic device 100, software is divided into several layers, and each layer has a clear role and task. The layers communicate with each other through software interfaces. In some embodiments, the Android system is divided into four layers: an application layer, an application framework layer, an Android Runtime (Android Runtime) and system library, and a kernel layer from top to bottom.

The application layer may include a series of application packages.

As shown in FIG. 6, the application package may include applications such as Phone, Camera, Gallery, Calendar, Map, Navigation, Bluetooth, Music, and Video.

The application framework layer provides an application programming interface (application programming interface, API) and a programming framework for the applications at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of the display screen, determine whether there is a status bar, perform screen locking, take a screenshot, and the like.

The content provider is configured to store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. The display interface may include one or more views. For example, a display interface including an SMS message notification icon may include a view for displaying text and a view for displaying a picture.

The phone manager is configured to provide a communication function for the electronic device 100, for example, management of a call status (including answering, declining, and the like).

The resource manager provides various resources such as a localized character string, an icon, a picture, a layout file, and a video file for an application.

The notification manager enables an application to display notification information in a status bar, may be configured to convey a notification-type message. The notification-type message may automatically disappear after the message is displayed for a short period of time without user interaction. For example, the notification manager is configured to provide a notification of download completion, a message notification, and the like.

As shown in FIG. 6, the application framework layer may further include an on-card characteristic adjustment module. In this embodiment of this application, the on-card characteristic adjustment module may be disposed in an application processor, and may be configured to adjust a state of an on-card characteristic when the state of the on-card characteristic does not meet expectations.

In another implementation, the on-card characteristic adjustment module may alternatively be arranged at the application layer. This is not limited in this embodiment.

The Android Runtime includes a kernel library and a virtual machine. The Android Runtime is responsible for scheduling and management of the Android system.

The kernel library includes two parts: a function that needs to be called in language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording of a plurality of commonly used audio and video formats, static image files, and the like. The media library may support a plurality of audio and video encoding formats, for example, MPEG4, H.264, MP3, AAC, AMR, JPG, PNG, and the like.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, an audio driver, a Wi-Fi driver, a sensor drive, and the like. The hardware includes at least a processor, a display screen, a speaker, a Wi-Fi module, a sensor, and the like.

It may be understood that the layers in the software structure shown in FIG. 6 and components included in the layers do not constitute a specific limitation on the electronic device 100. In some other embodiments of this application, the electronic device 100 may include more or fewer layers than those shown in the figure, and each layer may include more or fewer components. This is not limited in this application.

It may be understood that to implement the configuration management method for an on-card configuration characteristic in embodiments of this application, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person skilled in the art may use different methods to implement the described functions of each particular application with reference to the embodiments, but it should not be considered that the implementation goes beyond the scope of this application.

An embodiment of this application provides a configuration management method for an on-card configuration characteristic. In the method, configuration of an on-card characteristic is managed based on an AP side, so that a status of configuring on-card configuration characteristics of terminal devices can be managed in a unified manner, and the status of configuring the on-card configuration characteristics of the terminal devices can be managed in a targeted manner.

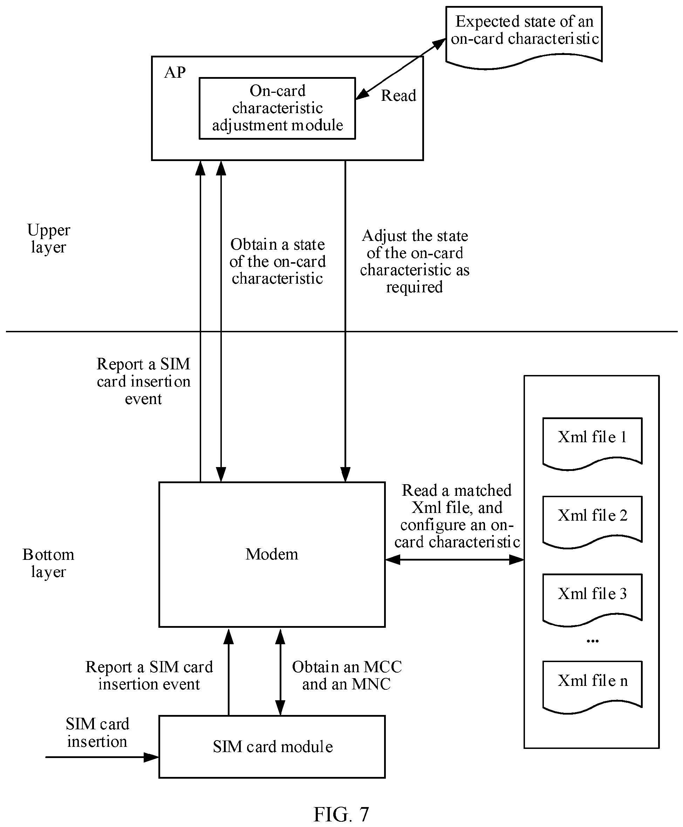

Refer to FIG. 7. After a SIM card is inserted into a SIM card module of a terminal device (that is, after the SIM card module detects that a status of the SIM card changes), the SIM card module identifies a communication operator to which the SIM card belongs, that is, identifies an MCC and an MNC of the SIM card, and reports a SIM card insertion event to a Modem. After receiving the SIM card insertion event, the Modem obtains the MCC and the MNC of the SIM card, and reads an Xml file matching the MCC and the MNC. In this way, the Modem configures a related communication characteristic of the terminal device based on communication characteristic configuration requirement information in the Xml file. For example, assuming that the communication operator to which the inserted SIM card belongs is a communication operator 1, the Modem configures a related communication characteristic of the terminal device based on communication characteristic configuration requirement information in an Xml file 1.

In addition, after receiving the SIM card insertion event, the Modem continues to report the SIM card insertion event to an AP. After receiving the SIM card insertion event, the AP obtains a state of an on-card characteristic from the Modem, for example, may obtain a state of an on-card characteristic that the AP is interested. If the state of the on-card characteristic obtained from the Modem is inconsistent with an expected state of the on-card characteristic read by the AP, the Modem is instructed to adjust the state of the corresponding on-card characteristic. After the Modem reconfigures the state of the corresponding on-card characteristic, the terminal device may register with an access network or process related communication service data based on a reconfigured state of the on-card characteristic.

In this way, terminal on-card characteristic configurations can be conveniently managed based on the AP side in a unified manner, so that there is no need to separately perform configuration for each operator, and there is no need to separately perform code adaptation for each chip platform. In particular, if the expected state of the on-card characteristic read by the AP matches a terminal version and/or a terminal area, terminal on-card characteristic configurations may be conveniently managed in a targeted manner based on the AP side, that is, terminal on-card characteristic configurations only for a same version or a same area may be managed based on the AP side.

### Scenario 1

In this scenario, for a same on-card characteristic, expected states configured on a terminal AP side are the same.

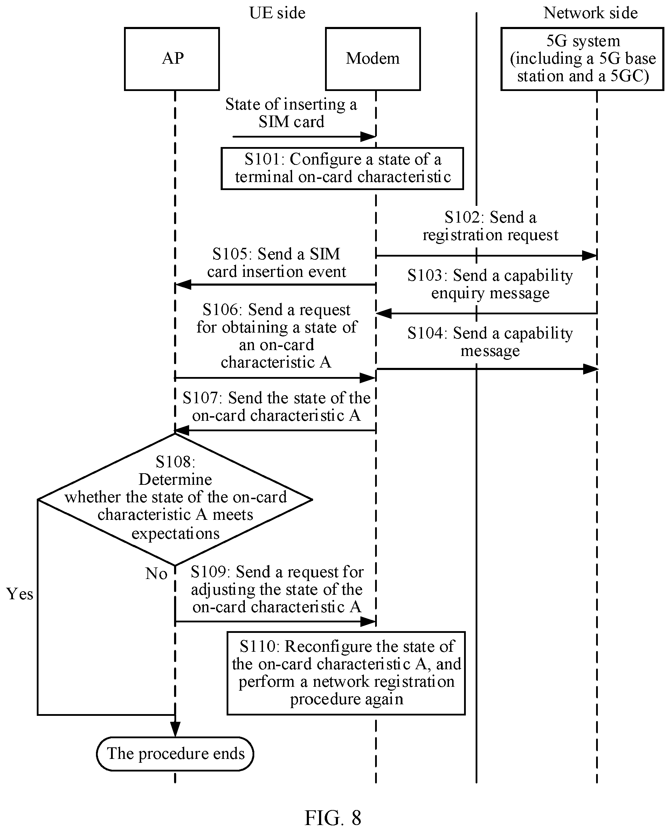

FIG. 8 is a schematic flowchart of interaction between modules. Refer to FIG. 8. A procedure of a configuration management method for an on-card configuration characteristic according to an embodiment of this application specifically includes the following steps.

S101: In response to a state of inserting a SIM card, a Modem of a UE configures a state of a terminal on-card characteristic.

For example, after the SIM card is inserted into a SIM card module of a terminal device, the SIM card module identifies a communication operator to which the SIM card belongs, that is, identifies an MCC and an MNC of the SIM card, and reports a SIM card insertion event to the Modem. After receiving the SIM card insertion event, the Modem obtains the MCC and the MNC of the SIM card, reads communication characteristic configuration requirement information matching the MCC and the MNC, and configures the on-card characteristic of the terminal device based on the communication characteristic configuration requirement information.

For example, if the Modem learns, based on the configuration requirement information of the operator to which the SIM card belongs, that a configuration requirement of an on-card characteristic A is being supported, the Modem configures a state of the on-card characteristic A as being supported.

In this step, the Modem of the UE completes configuration of states of all on-card characteristics. A UE capability (UE Capability) may include an on-card configuration characteristic supported by the UE. In other words, the terminal on-card characteristic on which state configuration is completed may be understood as a terminal capability.

The UE capability may include at least a capability related to radio access and a capability related to a core network service. Correspondingly, the terminal on-card characteristic may also include at least an on-card characteristic related to a radio access capability and an on-card characteristic related to a core network service processing capability.

S102: The UE sends a registration request to a 5G system.

For example, the 5G system may use a 5G SA (standalone) network, and includes a 5G base station and a 5GC. In a process of connecting to the 5G SA network, the UE is first connected to the 5G base station, and attaches (Attaches) and registers with the 5GC.

Specifically, the UE may first send the registration request (for example, the registration request) to the 5G SA network. The registration request may include information such as a registration type and a security parameter.

In some embodiments of this application, the UE may alternatively send the registration request to a 4G system, for example, an NSA networking system of a 4G core network. This is not limited in this embodiment.

It should be noted that the on-card characteristic that is subject to the state configuration on the Modem side of the UE is related to a communication system with which the UE registers. For example, when the UE registers with a 5G communication system, the on-card characteristic is related to the 5G communication system, for example, whether VONR is supported. For another example, when the UE registers with a 4G communication system, the on-card characteristic is related to the 4G communication system, for example, whether VOLTE is supported.

S103: The 5G SA network sends a capability enquiry message to the UE.

S104: The UE sends a capability message to the 5G SA network.

If the registration request does not carry the capability information of the UE, the 5G SA network delivers a capability enquiry message (for example, a UE Capability Enquiry instruction) to the UE. The capability enquiry message is used to request a radio access capability of the UE in NR. The UE receives the capability enquiry message, and sends a capability message (for example, UE Capability Information) to the base station, to report the radio access-related capability of the UE to the 5G SA network. For example, the radio access-related capability of the UE may include: whether VONR is supported, whether VOLTE is supported, and the like.

It should be noted that, if the registration request sent by the UE to the 5G SA network carries the capability information of the UE, the 5G SA network no longer sends the capability enquiry message to the UE. When the UE is connected to the 5G SA network, the 5G SA network needs to learn of the UE capability during determining of various events. Therefore, when the base station requires the UE to report the UE capability, the base station delivers the UE capability enquiry instruction to the UE. After the UE receives the UE Capability enquiry instruction, the UE reports the UE capability information based on the instruction.

Then, the 5G SA network verifies an identity of the UE based on the information provided by the UE. After the verification succeeds, if the 5G SA network accepts the UE, the 5G SA network feeds back a registration accept (for example, registration accept) message to the UE. The registration accept message may include an indication of whether the 5G SA network supports VoNR, whether the 5G SA network supports N26 interface-based interoperability, and the like. After the UE is connected to the 5G SA network, the UE may communicate with the 5GC and use various services provided by the 5GC. For details that are not explained and described in this procedure, refer to conventional technologies. The details are not described herein again.

It should be noted that, when the UE is connected to the 5G SA network, a terminal on-card characteristic related to the radio access capability (that is, a terminal capability related to radio access) is reported to a network side.

S105: The Modem of the UE sends the SIM card insertion event to an AP.

After receiving the SIM card insertion event, the Modem reports the SIM card insertion event to the AP.

It should be noted that a process in which the Modem performs network registration (for example, 102 to 104) and S105 may be simultaneously performed, which are two separate events. Alternatively, network registration may be performed before S105, or S105 may be performed before network registration. In other words, a sequence of performing S105 and S102 to S104 is not limited in this embodiment.

S106: After receiving the SIM card insertion event, the AP of the UE sends, to the Modem, a request for obtaining the state of the on-card characteristic A.

In response to the received SIM card insertion event, the AP queries the Modem for configuration states of some on-card characteristics. The on-card characteristics that the AP needs to query are some preset on-card characteristics (or referred to as UE capabilities) that the terminal is interested, and may include the on-card characteristic related to the radio access capability or the on-card characteristic related to the core network service processing capability.

It should be noted that the on-card characteristic that the AP is interested is related to the communication system with which the UE registers. For example, when the UE registers with the 5G communication system, the on-card characteristic that the AP is interested is related to the 5G communication system, for example, whether VONR is supported. For another example, when the UE registers with the 4G communication system, the on-card characteristic that the AP is interested is related to the 4G communication system, for example, whether VOLTE is supported.

A request for obtaining a state of an on-card characteristic may include, but is not limited to, an identifier of the on-card characteristic. When there are a plurality of on-card characteristics that the AP needs to query, a request for obtaining a state of an on-card characteristic may include a quantity of on-card characteristics and an identifier of each on-card characteristic.

Table 3 shows an example of a list of on-card characteristics that the terminal is interested. As shown in Table 3, in this scenario, for a same on-card characteristic, an expected state of the terminal is the same. It should be noted that, if there are a plurality of on-card characteristics that the terminal is interested, the AP sends, to the Modem, a request for obtaining states of on-card characteristics corresponding to the plurality of on-card characteristics. In this embodiment, explanations and descriptions are provided below only by using the on-card characteristic A that the terminal is interested as an example. In this embodiment of this application, it is assumed that the on-card characteristic A is a terminal on-card characteristic related to the radio access capability. Therefore, when the UE is connected to the 5G SA network, the state of the on-card characteristic A is reported to the network side as a UE capability.

**Table 3**

| On-card characteristic | Expected state |
|---|---|
| On-card characteristic A | Not supported |
| On-card characteristic B | Supported |
| On-card characteristic C | Enabled |
| On-card characteristic D | Supported |
| ... | ... |

For example, in this embodiment of this application, a relationship between an on-card characteristic and a corresponding expected state is also set on the AP side, as shown in Table above. For another example, a form of storing the relationship between an on-card characteristic and an expected state on the AP side may also be in a form of an Xml file similar to that stored on the Modem side.

S107: The Modem of the UE sends the state of the on-card characteristic A to the AP in response to the request for obtaining the state of the on-card characteristic A.

The AP sends, to the Modem, the request for obtaining the state of the on-card characteristic A. In response to the received request for obtaining the state of the on-card characteristic A, the Modem reads the state of the on-card characteristic A, and feeds back the state of the on-card characteristic A to the AP.

S108: The AP of the UE determines whether the state of the on-card characteristic A meets expectations. If the state of the on-card characteristic A does not meet expectations, S109 is performed; or if the state of the on-card characteristic A meets expectations, an on-card characteristic state adjustment procedure ends.

After receiving the state of the on-card characteristic A sent by the Modem, the AP reads an expected state of the on-card characteristic A, and determines whether the state of the on-card characteristic A in the Modem is consistent with the expected state.

For example, the state of the on-card characteristic A sent by the Modem is being supported, and the expected state of the on-card characteristic A read by the AP is being not supported. In this case, the state of the on-card characteristic A in the Modem is inconsistent with the expected state, that is, the AP determines that the state of the on-card characteristic A does not meet expectations.

S109: The AP of the UE sends, to the Modem, a request for adjusting the state of the on-card characteristic A.

When the AP determines that the state of the on-card characteristic A does not meet expectations, the AP sends, to the Modem, the request for adjusting the state of the on-card characteristic A, so that the state of the on-card characteristic A is consistent with the expected state.

A request for adjusting a state of an on-card characteristic may include, but is not limited to, an identifier and an expected state of the on-card characteristic. When there are a plurality of on-card characteristics that are inconsistent with expected states, a request for adjusting a state of an on-card characteristic may include a quantity of on-card characteristics that are inconsistent with expected states, and an identifier and an expected state of each on-card characteristic.

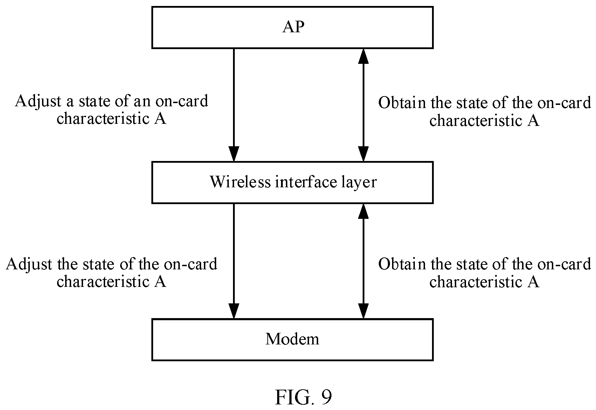

As shown in FIG. 9, information exchange between the AP and the Modem may be implemented based on an RIL (Radio Interface Layer, RIL). The RIL is implemented in Android into two parts: RILJ and RILC. The RILJ belongs to a part of Java at a Framework (Framework) layer, and the RILC belongs to a part of C/C++ at an HAL layer. In an implementation, the AP may invoke a related method in the RILJ to send, to the RILC, the request for obtaining the state of the on-card characteristic, and then the RILC transfers, to the Modem, the request for obtaining the state of the on-card characteristic. The Modem invokes a related method in the RILC to send the state of the on-card characteristic to the RILJ, and then the RILJ transfers the state of the on-card characteristic to the AP. When determining that an on-card characteristic that is inconsistent with an expected state exists, the AP invokes the related method in the RILJ to send, to the RILC, the request for adjusting the state of the on-card characteristic, and then the RILC transfers, to the Modem, the request for adjusting the state of the on-card characteristic.

S110: The Modem of the UE reconfigures the state of the on-card characteristic A in response to the request for adjusting the state of the on-card characteristic A, and executes a network re-residing procedure.

The AP sends, to the Modem, the request for adjusting the state of the on-card characteristic A. In response to the received request for adjusting the state of the on-card characteristic A, the Modem parses the request for adjusting the state of the on-card characteristic A to obtain the expected state of the state of the on-card characteristic A, and reconfigures the state of the on-card characteristic A based on the expected state, so that the terminal on-card characteristic A meets expectations, that is, the state of the on-card characteristic A is configured as being not supported.

It should be noted that a process in which the AP side determines whether a state of an on-card characteristic that the AP side is interested meets expectations, and when the state of the on-card characteristic does not meet expectations, triggers reconfiguration of the state of the on-card characteristic is parallel to a process of connecting the UE to the 5G SA network.

In a possible case, before the state of the on-card characteristic A is reconfigured, the state of the on-card characteristic A has been reported to the network side as a UE capability. In this case, after the state of the on-card characteristic A is reconfigured, the UE executes the website registration procedure again, and reports a reconfigured state of the on-card characteristic A as an updated UE capability.

For example, the UE sends a registration request message to the base station, where the registration request message indicates that the base station needs to perform wireless capability update. For example, a bit value of NR-RAN-RCU in the registration request message indicates whether the radio access capability needs to be updated.

The base station sends a UE capability enquiry message to the UE in response to the received registration request message. For example, the base station parses the registration request message, and sends the UE capability enquiry message to the UE if the bit value of NR-RAN-RCU in the registration request message indicates that the radio access capability needs to be updated. The UE sends UE capability information to the base station in response to the UE capability enquiry message. Assuming that the on-card characteristic A is whether VONR is supported, the UE capability information sent by the UE to the base station indicates that the UE does not support VONR.

For example, the UE may further report the reconfigured state of the on-card characteristic A as the UE capability to the network side according to a TAU (Tracking Area Update, TAU) process or a process of attaching to a core network.

In a possible case, before the state of the on-card characteristic A is reconfigured, the state of the on-card characteristic A has not been reported to the network side. In this case, when the UE needs to report the state of the on-card characteristic A, the reconfigured state of the on-card characteristic A may be directly reported as the UE capability.

In a possible implementation, when reporting a capability corresponding to an on-card characteristic, the terminal may set a value of a corresponding field based on a state of the on-card characteristic. For example, when the configuration state of the on-card characteristic is a first state (for example, being supported or enabled), a value of a field of the capability corresponding to the on-card characteristic is set to "1". When the state of the on-card characteristic is a second state (for example, being not supported or not enabled), a value of a field of the capability corresponding to the on-card characteristic is set to "0".

In this way, terminal on-card characteristic configurations can be conveniently managed based on the terminal AP side in a unified manner, so that a configuration state of an on-card characteristic that is of interest meets expectations, there is no need to separately perform configuration for each operator, and there is no need to separately perform code adaptation for each chip platform.

### Scenario 2

In this scenario, for a same on-card characteristic, expected states configured on a terminal AP side vary. For example, for the same on-card characteristic, expected states of terminal devices with different versions vary. For example, for the same on-card characteristic, expected states of terminal devices in different areas vary.

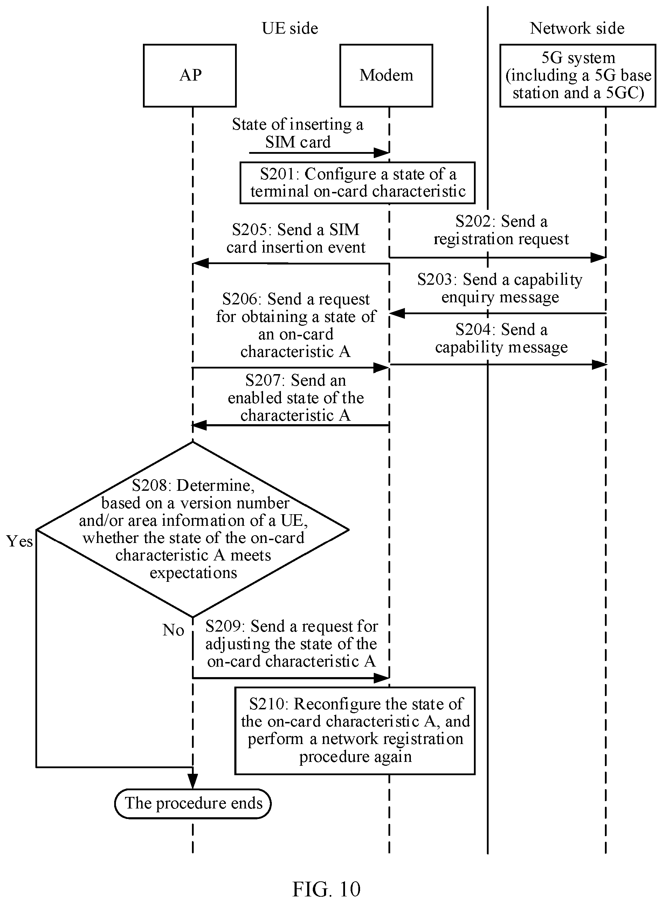

FIG. 10 is a schematic flowchart of interaction between modules. Refer to FIG. 10. A procedure of a configuration management method for an on-card configuration characteristic according to an embodiment of this application specifically includes the following steps.

S201: In response to a state of inserting a SIM card, a Modem of a UE configures a state of a terminal on-card characteristic.

S202: The UE sends a registration request to a 5G system.

S203: The 5G SA network sends a capability enquiry message to the UE.

S204: The UE sends a capability message to the 5G SA network.

S205: The Modem of the UE sends the SIM card insertion event to an AP.

A sequence of performing S205 and S202 to S204 is not limited in this embodiment.

S206: After receiving the SIM card insertion event, the AP of the UE sends, to the Modem, a request for obtaining the state of the on-card characteristic A.

In this embodiment, explanations and descriptions are provided below still only by using the on-card characteristic A that the terminal is interested as an example. In this embodiment of this application, it is assumed that the on-card characteristic A is a terminal on-card characteristic related to radio access. Therefore, when the UE is connected to the 5G SA network, the state of the on-card characteristic A is reported to the network side as a UE capability.

**Table 4**

| On-card characteristic | Terminal version number | Expected state |
|---|---|---|
| On-card characteristic A | Version A | Supported |
| | Version B | Supported |
| | Version C | Not supported |
| On-card characteristic B | Version A | Supported |
| | Version B | Not supported |
| On-card characteristic C | Version B | Enabled |
| | Version C | Not enabled |
| ... | ... | ... |

Table 4 shows an example of a list of on-card characteristics that the terminal is interested. As shown in Table 4, in this scenario, for a same on-card characteristic, expected states of terminals vary. An expected state of a terminal for the same on-card characteristic is related to a terminal version number.

Table 5 shows an example of a list of on-card characteristics that the terminal is interested. As shown in Table 5, in this scenario, for a same on-card characteristic, expected states of terminals vary. An expected state of a terminal for the same on-card characteristic is related to a terminal area information.

**Table 5**

| On-card characteristic | Terminal area information | Expected state |
|---|---|---|
| On-card characteristic A | Area A | Supported |
| | Area B | Supported |
| | Area C | Not supported |
| On-card characteristic B | Area A | Supported |
| | Area B | Not supported |
| On-card characteristic C | Area B | Enabled |
| | Area C | Not enabled |
| ... | ... | ... |

Table 6 shows an example of a list of on-card characteristics that the terminal is interested. As shown in Table 6, in this scenario, for a same on-card characteristic, expected states of terminals vary. An expected state of a terminal for the same on-card characteristic is related to a terminal version number and terminal area information.

**Table 6**

| On-card characteristic | Terminal area information | Terminal version number | Expected state |
|---|---|---|---|
| On-card characteristic A | Area A | Version A | Supported |
| | | Version B | Not supported |
| | Non-area A | Version A | Not supported |
| | | Version B | Supported |
| On-card characteristic B | Area A | Version A | Supported |
| | Non-area A | Version A | Not supported |
| On-card characteristic C | Area A | Version C | Enabled |
| | Non-area A | Version C | Not enabled |
| ... | | ... | ... |

In addition to the terminal version number and the terminal area information mentioned, the expected state of the on-card characteristic may also be related to other factors, for example, a mobile phone of a specific model, which may be specifically set based on an actual situation of the terminal device. This is not limited in this embodiment.

S207: The Modem of the UE sends the state of the on-card characteristic A to the AP in response to the request for obtaining the state of the on-card characteristic A.

S208: The AP of the UE determines, based on a version number and/or area information of the UE, whether the state of the on-card characteristic A meets expectations. If the state of the on-card characteristic A does not meet expectations, S209 is performed; or if the state of the on-card characteristic A meets expectations, an on-card characteristic state adjustment procedure ends.

When the expected state of the on-card characteristic that the terminal is interested is only related to the terminal version number, the AP obtains a terminal version number of the UE, queries an expected state of the on-card characteristic A based on the terminal number of the UE, and determines whether the state of the on-card characteristic A meets expectations.

When the expected state of the on-card characteristic that the terminal is interested is only related to the terminal area information, the AP obtains terminal area information of the UE, queries an expected state of the on-card characteristic A based on the terminal area information of the UE, and determines whether the state of the on-card characteristic A meets expectations.

When the expected state of the on-card characteristic that the terminal is interested is related to both the terminal version number and the terminal area information, the AP obtains a terminal version number and terminal area information of the UE, queries an expected state of the on-card characteristic A based on the terminal version number and the terminal area information of the UE, and determines whether the state of the on-card characteristic A meets expectations.

When the AP determines that the state of the on-card characteristic A does not meet expectations, the AP sends, to the Modem, the request for adjusting the state of the on-card characteristic A, so that the state of the on-card characteristic A is consistent with the expected state.

S209: The AP of the UE sends, to the Modem, a request for adjusting the state of the on-card characteristic A.

S210: The Modem of the UE reconfigures the state of the on-card characteristic A in response to the request for adjusting the state of the on-card characteristic A, and executes a network re-residing procedure.

For details that are not explained and described in this procedure, refer to the foregoing descriptions. The details are not described herein again.

In this way, based on the terminal AP side, terminal on-card characteristic configurations can be conveniently managed in a unified manner. In addition, based on the terminal AP side, terminal on-card characteristic configurations in different countries or regions can be managed in a unified manner, or on-card characteristic configurations for terminals with different versions can be managed in a unified manner.

### Scenario 3

In this scenario, the UE is a dual SIM card device, and on-card characteristic configurations of different Modems in the UE can be managed based on the AP side in a unified manner. For a same on-card characteristic, expected states configured on a terminal AP side may be the same or different. Explanations and descriptions are provided below by using an example in which for the same on-card characteristic, expected states configured on a terminal AP side vary.

In addition, two SIM cards installed in the UE may belong to a same communication operator, or may belong to different communication operators. This is not limited in this embodiment. Explanations and descriptions are provided below by using an example in which the two SIM cards belong to different communication operators.

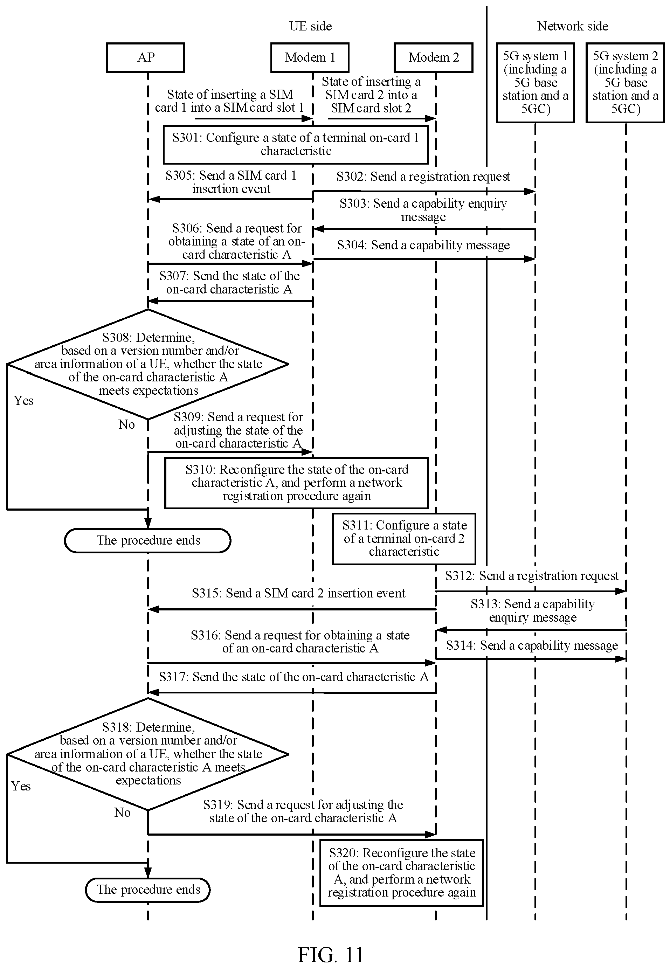

FIG. 11 is a schematic flowchart of interaction between modules. Refer to FIG. 11. A procedure of a configuration management method for an on-card configuration characteristic according to an embodiment of this application specifically includes the following steps.

S301: In response to a state of inserting a SIM card 1 into a SIM card slot 1, a Modem 1 of a UE configures a state of a terminal on-card 1 characteristic.

For example, after the SIM card 1 is inserted into a SIM card module 1 of a terminal device, the SIM card module 1 identifies a communication operator to which the SIM card belongs, that is, identifies an MCC and an MNC of the SIM card, and reports a SIM card 1 insertion event to the Modem 1. After receiving the SIM card 1 insertion event, the Modem 1 obtains the MCC and the MNC of the SIM card 1, reads communication characteristic configuration requirement information matching the MCC and the MNC, and configures the on-card characteristic of the Modem 1 of the terminal device based on the communication characteristic configuration requirement information.

S302: The UE sends a registration request to a 5G system 1.

S303: A 5G SA network 1 sends a capability enquiry message to the UE.

S304: The UE sends a capability message to the 5G SA network 1.

The 5G system 1 may use a 5G SA network, which is referred to as the 5G SA network 1 for differentiation.

S305: The Modem 1 of the UE sends the SIM card 1 insertion event to an AP.

A sequence of performing S305 and S302 to S304 is not limited in this embodiment.

S306: After receiving the SIM card insertion event, the AP of the UE sends, to the Modem 1, a request for obtaining a state of the on-card characteristic A.

S307: The Modem 1 of the UE sends the state of the on-card characteristic A to the AP in response to the request for obtaining the state of the on-card characteristic A.

S308: The AP of the UE determines, based on a version number and/or area information of the UE, whether the state of the on-card characteristic A meets expectations. If the state of the on-card characteristic A does not meet expectations, S209 is performed; or if the state of the on-card characteristic A meets expectations, an on-card 1 characteristic adjustment procedure ends.

S309: The AP of the UE sends, to the Modem 1, a request for adjusting the state of the on-card characteristic A.

S310: The Modem 1 of the UE reconfigures the state of the on-card characteristic A in response to the request for adjusting the state of the on-card characteristic A, and executes a network re-residing procedure.

S311: In response to a state of inserting a SIM card 2 into a SIM card slot 2, a Modem 2 of the UE configures a state of a terminal on-card 2 characteristic.

For example, after the SIM card 2 is inserted into a SIM card module 2 of a terminal device, the SIM card module 2 identifies a communication operator to which the SIM card belongs, that is, identifies an MCC and an MNC of the SIM card, and reports a SIM card 2 insertion event to the Modem 2. After receiving the SIM card 2 insertion event, the Modem 2 obtains the MCC and the MNC of the SIM card 2, reads communication characteristic configuration requirement information matching the MCC and the MNC, and configures the on-card characteristic of the Modem 2 of the terminal device based on the communication characteristic configuration requirement information.

S312: The UE sends a registration request to a 5G system 2.

S313: A 5G SA network 2 sends a capability enquiry message to the UE.

The 5G system 2 may use a 5G SA network, which is referred to as the 5G SA network 2 for differentiation.

S314: The UE sends a capability message to the 5G SA network 2.

S315: The Modem 2 of the UE sends the SIM card 2 insertion event to an AP.

A sequence of performing S315 and S312 to S314 is not limited in this embodiment.

S316: After receiving the SIM card insertion event, the AP of the UE sends, to the Modem 2, a request for obtaining the state of the on-card characteristic A.

S317: The Modem 2 of the UE sends the state of the on-card characteristic A to the AP in response to the request for obtaining the state of the on-card characteristic A.

S318: The AP of the UE determines, based on a version number and/or area information of the UE, whether the state of the on-card characteristic A meets expectations. If the state of the on-card characteristic A does not meet expectations, S319 is performed; or if the state of the on-card characteristic A meets expectations, an on-card 2 characteristic adjustment procedure ends.

S319: The AP of the UE sends, to the Modem 2, a request for adjusting the state of the on-card characteristic A.

S320: The Modem 2 of the UE reconfigures the state of the on-card characteristic A in response to the request for adjusting the state of the on-card characteristic A, and executes a network re-residing procedure.

S301 and S311 may be performed simultaneously. A sequence of performing S301 to S310 and S311 to S320 is not limited in this embodiment.

For details that are not explained and described in this procedure, refer to the foregoing descriptions. The details are not described herein again.

In this way, in a dual-card terminal device, based on the terminal AP, the terminal on-card 1 characteristic configuration and the terminal on-card 2 characteristic configuration can also be managed in a unified manner.

### Scenario 4

This scenario follows Scenario 3. It is assumed that the user takes out the SIM card 1 in the SIM card slot 1 and inserts a SIM card 3 into the SIM card slot 1. The SIM card 2 inserted into the SIM card slot 2 remains unchanged.

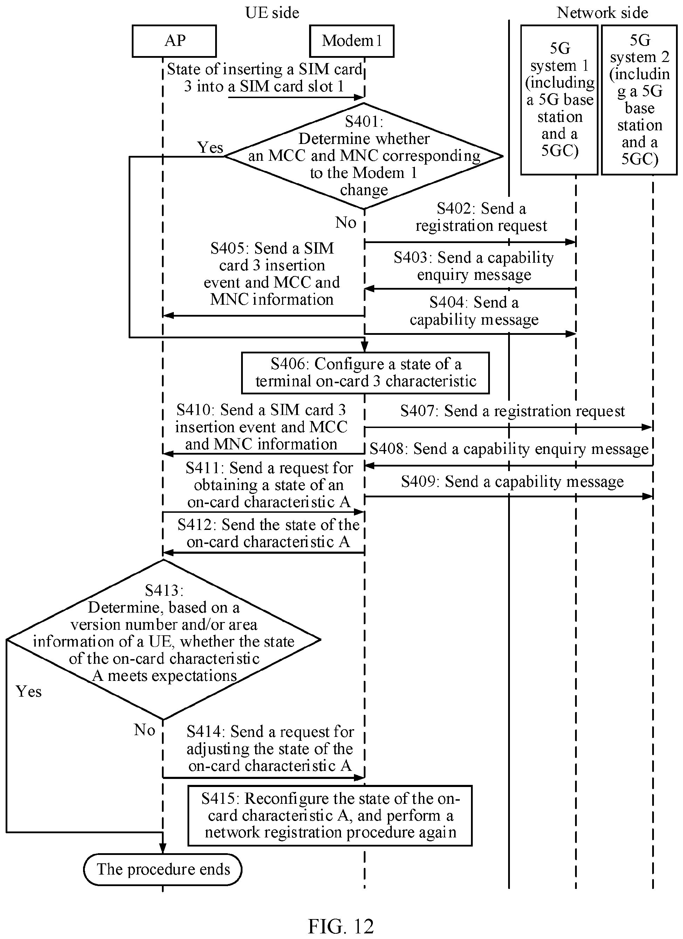

FIG. 12 is a schematic flowchart of interaction between modules. Refer to FIG. 12. A procedure of a configuration management method for an on-card configuration characteristic according to an embodiment of this application specifically includes the following steps.

S401: In response to a state of inserting the SIM card 3 into the SIM card slot 1, the Modem 1 of the UE determines whether the MCC and the MNC corresponding to the Modem 1 change. If the MCC and the MNC do not change, S402 is performed; and if the MCC and the MNC change, S405 is performed.

For example, the Modem obtains an MCC and an MNC of the SIM card each time after receiving the SIM card insertion event reported by the SIM card module, and records the MCC and the MNC. The Modem may store only an MCC and an MNC of a SIM card most recently inserted as the MCC and the MNC corresponding to the Modem 1, to determine whether a communication operator to which the SIM card inserted into the SIM card slot belongs change. For example, both an initial MCC and MNC corresponding to the Modem 1 are null values.

In this scenario, after the SIM card 1 is inserted into a SIM card module 1 of a terminal device, the SIM card module 1 identifies a communication operator to which the SIM card belongs, that is, identifies an MCC and an MNC of the SIM card, and reports a SIM card 1 insertion event to the Modem 1. After receiving the SIM card 1 insertion event, the Modem 1 obtains and records the MCC and the MNC of the SIM card 1. In this case, the Modem 1 records the MCC and the MNC of the SIM card 1, that is, the MCC and the MNC corresponding to the Modem 1 are the MCC and the MNC of the SIM card 1.

After the user takes out the SIM card 1 and inserts the SIM card 3 into the SIM card slot 1, the SIM card module 1 identifies a communication operator to which the SIM card belongs, that is, identifies an MCC and an MNC of the SIM card, and reports a SIM card 3 insertion event to the Modem 1. After receiving the SIM card 3 insertion event, the Modem 1 obtains an MCC and an MNC of the SIM card 3, updates the MCC and the MNC corresponding to the Modem 1, and determines whether the MCC and the MNC corresponding to the Modem 1 change after the update.

If the MCC and the MNC corresponding to the Modem 1 do not change after the update, it indicates that the communication operator to which the SIM card inserted into the SIM card slot corresponding to the Modem 1 belongs does not change. A state configuration status of a terminal on-card 3 characteristic is the same as a state configuration status of the terminal on-card 1 characteristic. In addition, after the AP receives the SIM card 1 insertion event, a state of the on-card characteristic in the Modem 1 has been adjusted to meet expectations. Therefore, as long as the terminal area information does not change, the state of the on-card characteristic in the Modem 1 necessarily meets expectations. Further, the Modem 1 does not need to configure a state of the terminal on-card 3 characteristic.

If the MCC and the MNC corresponding to the Modem 1 change after the update, it indicates that the communication operator to which the SIM card inserted into the SIM card slot corresponding to the Modem 1 belongs changes. Because the state configuration status of the terminal on-card 3 characteristic and the state configuration status of the terminal on-card 1 characteristic may not be the same, the Modem 1 needs to configure the state of the terminal on-card 3 characteristic.

S402: The UE sends a registration request to a 5G system 1.

S403: A 5G SA network 1 sends a capability enquiry message to the UE.

S404: The UE sends a capability message to the 5G SA network 1.

The 5G system 1 may use a 5G SA network, which is referred to as the 5G SA network 1 for differentiation.

In an example following the example in Scenario 3, because communication operators to which the SIM card 1 and the SIM card 3 belong are the same, the UE needs to be connected to the 5G SA network 1.

S405: The Modem 1 of the UE sends the SIM card 3 insertion event and MCC and MNC information to the AP.

In an implementation, the MCC and MNC information indicates whether the MCC and the MNC corresponding to the Modem 1 change.

After the AP of the UE receives the SIM card 3 insertion event and the MCC and MNC information, if the MCC and MNC information indicates that the MCC and MNC corresponding to the Modem 1 do not change, and the terminal area information does not change, the AP of the UE does not need to obtain, from the Modem 1 side, a state of an on-card characteristic that the AP is interested, that is, does not need to determine whether the state of the on-card characteristic meets expectations.

After the AP of the UE receives the SIM card 3 insertion event and the MCC and MNC information, if the MCC and MNC information indicates that the MCC and MNC corresponding to the Modem 1 change, or the terminal area information changes, the AP of the UE needs to obtain, from the Modem 1 side, a state of an on-card characteristic that the AP is interested, and determine whether the state of the on-card characteristic meets expectations.

In an implementation, the MCC and MNC information indicates the MCC and the MNC of the SIM card 3, and the AP separately stores an MCC and an MNC corresponding to each Modem.

After receiving the SIM card 3 insertion event and the MCC and MNC information reported by the Modem 1, the AP of the UE updates the MCC and the MNC corresponding to the Modem 1, and determines whether the MCC and the MNC corresponding to the Modem 1 change after the update.

If the MCC and MNC corresponding to the Modem 1 do not change after the update, and the terminal area information does not change, the AP of the UE does not need to obtain, from the Modem 1 side, a state of an on-card characteristic that the AP is interested, that is, does not need to determine whether the state of the on-card characteristic meets expectations. If the MCC and MNC corresponding to the Modem 1 change after the update, or the terminal area information changes, the AP of the UE needs to obtain, from the Modem 1 side, a state of an on-card characteristic that the AP is interested, and determine whether the state of the on-card characteristic meets expectations.

It should be noted that, if the expected state of the on-card characteristic is not related to a terminal area, the AP of the UE only needs to determine, based on whether the MCC and the MNC corresponding to the Modem 1 change, whether there is a need to determine whether the state of the on-card characteristic meets expectations.

In S405, the MCC and MNC information may indicate whether the MCC and the MNC corresponding to the Modem 1 does not change. In this case, the AP does not need to obtain, from the Modem 1 side, a state of an on-card characteristic that the AP is interested, that is, does not need to determine whether the state of the on-card characteristic meets expectations.

A sequence of performing S405 and S402 to S404 is not limited in this embodiment.

S406: The Modem 1 of the UE configures the state of the terminal on-card 3 characteristic.

S407: The UE sends a registration request to a 5G system 2.

S408: A 5G SA network 2 sends a capability enquiry message to the UE.

S409: The UE sends a capability message to the 5G SA network 2.

The 5G system 2 may use a 5G SA network, which is referred to as the 5G SA network 2 for differentiation.

In an example following the example in Scenario 3, because communication operators to which the SIM card 1 and the SIM card 3 belong are different, it is assumed that the UE needs to be connected to the 5G SA network 2.

S410: The Modem 1 of the UE sends the SIM card 3 insertion event and MCC and MNC information to the AP.

For explanations and descriptions of S410, refer to S405. Details are not described herein again.

In S410, the MCC and MNC information may indicate whether the MCC and the MNC corresponding to the Modem 1 change. In this case, the AP of the UE needs to obtain, from the Modem 1 side, a state of an on-card characteristic that the AP is interested, determine whether the state of the on-card characteristic meets expectations, and continue to perform S411.

A sequence of performing S410 and S407 to S409 is not limited in this embodiment.

S411: The AP of the UE sends, to the Modem 1, a request for obtaining the state of the on-card characteristic A.

S412: The Modem 1 of the UE sends the state of the on-card characteristic A to the AP in response to the request for obtaining the state of the on-card characteristic A.

S413: The AP of the UE determines, based on a version number and/or area information of the UE, whether the state of the on-card characteristic A meets expectations. If the state of the on-card characteristic A does not meet expectations, S414 is performed; or if the state of the on-card characteristic A meets expectations, an on-card 3 characteristic adjustment procedure ends.

S414: The AP of the UE sends, to the Modem 1, a request for adjusting the state of the on-card characteristic A.

S415: The Modem 1 of the UE reconfigures the state of the on-card characteristic A in response to the request for adjusting the state of the on-card characteristic A, and executes a network re-residing procedure.

In addition, because the SIM card 2 inserted into the SIM card slot 2 does not change, the MCC and the MNC corresponding to the Modem 2 do not change, and the Modem 2 does not need to configure the state of the terminal on-card 2 characteristic. In this case, the AP also does not need to obtain, from the Modem 2 side, a state of an on-card characteristic that the AP is interested, and determine whether the state of the on-card characteristic meets expectations.

This procedure is still explained and described by using the on-card characteristic A as an example. For details that are not explained and described in this procedure, refer to the foregoing descriptions. The details are not described herein again.

In this way, when an MCC and an MNC corresponding to a Modem does not change, the Modem side does not need to repeatedly configure the state of the terminal on-card characteristic, and the AP side does not need to determine whether the state of the on-card characteristic meets expectations. This reduces unnecessary interaction between the AP and the Modem, and avoids a waste of resources.

### Scenario 5

Different from Scenario 1 to Scenario 4, in this scenario, explanations and descriptions are provided by using the on-card characteristic B that the terminal is interested as an example. In this embodiment of this application, it is assumed that the on-card characteristic B is a terminal on-card characteristic related to the core network service processing capability. Therefore, when the UE is connected to the 5G SA network, the state of the on-card characteristic B is not reported to the network side as a UE capability, but is reported to the network side as a UE capability only when the user initiates a related service.

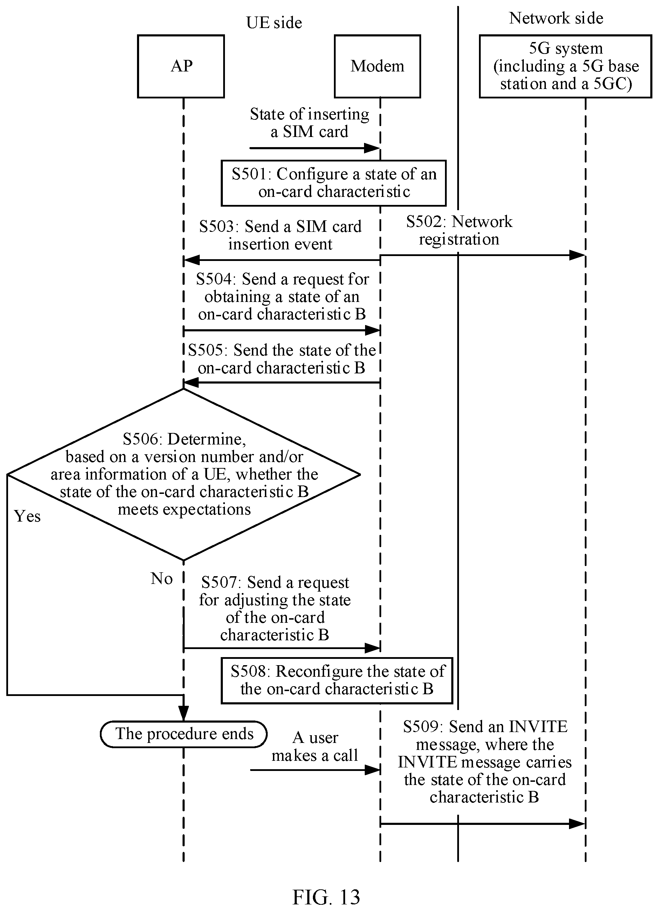

FIG. 13 is a schematic flowchart of interaction between modules. Refer to FIG. 13. A procedure of a configuration management method for an on-card configuration characteristic according to an embodiment of this application specifically includes the following steps.

S501: In response to a state of inserting a SIM card, a Modem of a UE configures a state of an on-card characteristic.

S502: The UE performs network registration with a 5G system.

For example, the 5G system may use a 5G SA network, and includes a 5G base station and a 5GC. In a process of connecting to the 5G SA network, the UE is first connected to the 5G base station, and attaches (Attaches) and registers with the 5GC.

For example, the UE may first send the registration request (for example, the registration request) to the 5G SA network. The registration request may include information such as a UE capability related to radio access, a registration type, and a security parameter. The 5G SA network verifies an identity of the UE based on the information provided by the UE. After the verification succeeds, if the 5G SA network accepts the UE, the 5G SA network feeds back a registration accept (for example, registration accept) message to the UE. The registration accept message may include an indication of whether the 5G SA network supports VoNR, whether the 5G SA network supports N26 interface-based interoperability, and the like. After the UE is connected to the 5G SA network, the UE may communicate with the 5GC and use various services provided by the 5GC. For details that are not explained and described in this procedure, refer to conventional technologies. The details are not described herein again.

S503: The Modem of the UE sends the SIM card insertion event to an AP.

A sequence of performing S503 and S502 is not limited in this embodiment.

S504: After receiving the SIM card insertion event, the AP of the UE sends, to the Modem, a request for obtaining the state of an on-card characteristic B.

In this embodiment of this application, it is assumed that the on-card characteristic B is a terminal on-card characteristic related to the core network service processing capability. Therefore, when the UE is connected to the 5G SA network, the state of the on-card characteristic B is not reported to a network side as a UE capability.

S505: The Modem of the UE sends the state of the on-card characteristic B to the AP in response to the request for obtaining the state of the on-card characteristic B.

The AP sends, to the Modem, the request for obtaining the state of the on-card characteristic A. In response to the received request for obtaining the state of the on-card characteristic A, the Modem reads the state of the on-card characteristic A, and feeds back the state of the on-card characteristic A to the AP.

S506: The AP of the UE determines, based on a version number and/or area information of the UE, whether the state of the on-card characteristic B meets expectations. If the state of the on-card characteristic B does not meet expectations, S507 is performed; or if the state of the on-card characteristic B meets expectations, an on-card characteristic state adjustment procedure ends.

S507: The AP of the UE sends, to the Modem, a request for adjusting the state of the on-card characteristic B.

S508: The Modem of the UE reconfigures the state of the on-card characteristic B in response to the request for adjusting the state of the on-card characteristic B.

Because change of the state of the on-card characteristic B does not affect the radio access capability of the UE, the change of the state of the on-card characteristic B does not trigger the network re-residing procedure of the UE.

For details that are not explained and described in this procedure, refer to conventional technologies. The details are not described herein again.

S509: The UE sends an INVITE message to the network side in response to the operation of making a call by the user, where the INVITE message carries the state of the on-card characteristic B.

In this embodiment, the on-card characteristic B is set as whether an EVS encoding mode is supported.

When the user makes a call, a process in which the UE (hereinafter referred to as a terminal B) calls a terminal A is triggered. A voice solution involved when the terminal B initiates the call may include, but is not limited to, VoNR, VoLTE, a CS domain-based voice solution, VoWiFi, N3IWF, or the like. In this embodiment, a VoNR voice solution provided by the 5G system is used as an example for description. After the terminal B is connected to the 5G SA network, the terminal B needs to register with an IMS (Internet protocol Multimedia Subsystem, IMS) through the 5G SA network. Further, after connecting to the 5G SA network and registering with the IMS, the terminal B may use the VoNR voice solution provided by the 5G system.

The process in which the terminal B calls the terminal A through VoNR may include the following steps:
1. The terminal B sends an invite message to the 5GC, where the invite message may include an identifier of the terminal B (for example, an IMSI), a media type and an encoding mode supported by the terminal B, and the like.

For example, in S101, the Modem of the terminal B configures the state of the on-card characteristic B as not supporting the EVS encoding mode, but an expected state of the on-card characteristic B on the AP side is supporting an encoding mode 1. In this case, the Modem reconfigures the state of the on-card characteristic B as supporting the encoding mode 1. In this case, when the user initiates a call by using the terminal B, the invite message sent by the terminal B includes the encoding mode supported by the terminal B, including the encoding mode 1. For example, in the invite message sent by the terminal B, the included encoding mode supported by the terminal B includes the encoding mode 1, an encoding mode 2, and an encoding mode 3.

2. The terminal B establishes a signal radio bearer (signal radio bearer, SRB) 2, a quality of service class identifier (quality of service class identifier, QCI) 9 default bearer, and a QCI 5 session initiation protocol (session initiation protocol, SIP) signaling radio bearer.

3. The 5GC receives the invite message sent by the terminal B, and sends a response message invite 100 to the terminal A, indicating that the 5GC is processing the call initiated by the terminal B.

4. The 5GC sends an invite message to the terminal A, where the invite message is for paging the terminal A.

5. The terminal A receives the invite message, and establishes an SRB 2 signaling radio bearer, a QCI 9 default bearer, and a QCI 5 SIP signaling radio bearer.

6. A 5GC 202 sends an invite message to the terminal A.

7. The terminal A responds to the invite message.

8. The terminal A notifies the terminal B of a media type and an encoding mode supported by the terminal A.

It is assumed that an encoding mode supported by the terminal A includes the encoding mode 1, the encoding mode 2, and the encoding mode 3. In this case, a voice encoding mode negotiated and confirmed between the terminal B and the terminal A may be any one of the encoding mode 1, the encoding mode 2, and the encoding mode 3, for example, the encoding mode 1 with a better effect.

9. The terminal B establishes a QCI 1 data radio bearer for carrying multimedia data such as audio and video.

10. The terminal A establishes a QCI 1 data radio bearer for carrying multimedia data such as audio and video.

11. The 5GC indicates the terminal B to establish a QCI (where QCI=1) bearer.

12. The terminal B receives an invite 183 message from the terminal A.

13. The 5GC indicates the terminal A to establish a QCI (where QCI=1) bearer.

14. After receiving the invite 183 message from the terminal A, the terminal B sends an acknowledgement message PRACK, and starts a resource reservation process.

15. After receiving the PRACK from the terminal B, the terminal A returns a PRACK 200 response, and starts a resource reservation process.

16. After receiving the PRACK 200 called, the terminal B sends an UPDATE message, indicating that resource reservation by a calling terminal succeeds.

17. After receiving the UPDATE message from the terminal B, the terminal A learns that resource reservation by the terminal B succeeds. The terminal A sends the UPDATE 200, indicating that resource reservation by a called terminal succeeds.

18. The terminal A sends invite 180 to the terminal B, the terminal A rings, and the terminal B plays back a ring back tone.

In this way, the terminal B successfully calls the terminal A.

19. The terminal A goes off-hook, and sends invite 200 to the terminal B.

In this way, an IMS session is successfully established between the terminal B and the terminal A.

20. The terminal B and the terminal A communicate based on the IMS session. In other words, the terminal B makes an audio and video call with the terminal A through VoNR.

It may be understood that steps 1 to 20 above are simplified examples. During specific implementation, more or less signaling exchange may exist between the terminal B and the terminal A. This is not limited in this embodiment.

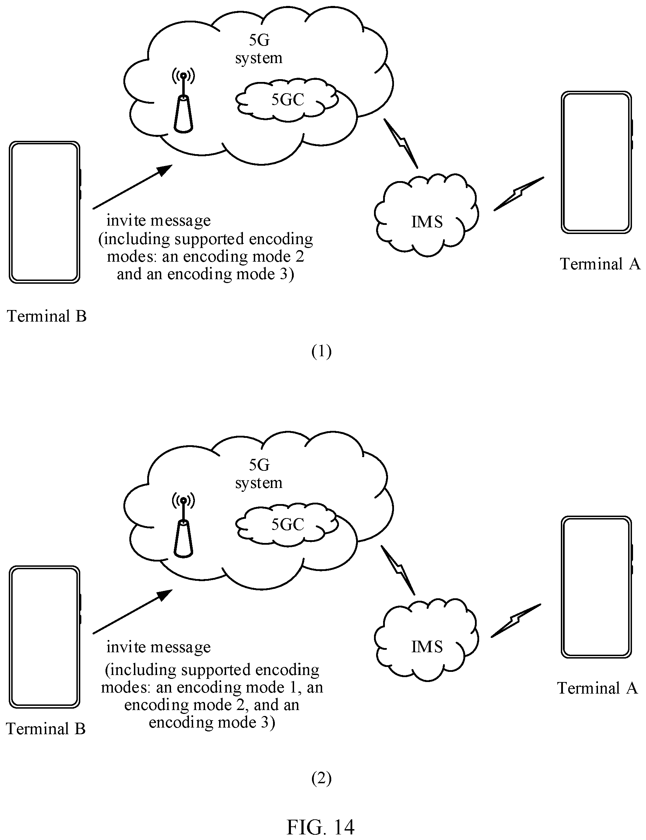

FIG. 14 is an example of a diagram of comparison of application scenarios. Before the terminal device performs the method provided in this embodiment of this application, for a diagram of an application scenario, refer to (1) in FIG. 14. Before the terminal device performs the method provided in this embodiment of this application, for a diagram of an application scenario, refer to (2) in FIG. 14.

Refer to (1) in FIG. 14. The Modem of the terminal B configures, based on the MCC and the MNC of the SIM, that the state of the on-card characteristic B is being not supporting the encoding mode 1. In this case, when the terminal B calls the terminal A, the terminal B reports, via the invite message, the encoding modes supported by the terminal B, including the encoding mode 2 and the encoding mode 3. Therefore, the speech encoding mode negotiated and confirmed between the terminal B and the terminal A may be the encoding mode 2 or the encoding mode 3.

Refer to (2) in FIG. 14. The Modem of the terminal B configures, based on the MCC and the MNC of the SIM, that the state of the on-card characteristic B is being not supporting the encoding mode 1, and the AP side of the terminal B obtains that the expected state of the on-card characteristic B is being supported, and triggers the Modem to reconfigure the state of the on-card characteristic B, so that the state of the on-card characteristic B meets expectations. In other words, if the Modem reconfigures the state of the on-card characteristic B as being supporting the encoding mode 1, when the terminal B calls the terminal A, the terminal B reports, via the invite message, the encoding mode supported by the terminal B, including the encoding mode 1, the encoding mode 2, and the encoding mode 3. Therefore, the voice encoding mode negotiated and confirmed between the terminal B and the terminal A may be any one of the encoding mode 1, the encoding mode 2, and the encoding mode 3.

For example, a common voice encoding mode includes: AMR (Adaptive Multi-Rate, AMR) encoding, AMR-WB (Adaptive Multi-Rate Wideband, AMR-WB) encoding, and EVS encoding. Terminals may negotiate, based on encoding mode priorities, to confirm a voice encoding mode used during voice communication.

This embodiment further provides a computer storage medium. The computer storage medium stores a computer instruction, and when the computer instruction runs on an electronic device, the electronic device is enabled to perform the related method steps, to implement the configuration management method for an on-card configuration characteristic in the foregoing embodiment.

This embodiment further provides a computer program product. When the computer program product runs on a computer, the computer is enabled to perform the related steps, to implement the configuration management method for an on-card configuration characteristic in the foregoing embodiment.

In addition, an embodiment of this application further provides an apparatus. The apparatus may be specifically a chip, a component, or a module. The apparatus may include a processor and a memory that are connected. The memory is configured to store a computer executable instruction, and when the apparatus runs, the processor may execute the computer executable instruction stored in the memory, so that the chip performs the configuration management method for an on-card configuration characteristic in the foregoing method embodiment.

The electronic device (such as a mobile phone), the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

Through the descriptions of the foregoing implementations, a person skilled in the art may understand that, for the purpose of convenient and brief description, only division of the foregoing functional modules is used as an example for description. In actual application, the foregoing functions may be allocated to and completed by different functional modules according to requirements. That is, an internal structure of an apparatus is divided into different functional modules to complete all or some of the functions described above.

In the several embodiments provided in this application, the disclosed apparatus and method may be implemented in other manners. For example, the described apparatus embodiment is merely exemplary. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The foregoing embodiments are merely intended for describing the technical solutions of this application, but not for limiting this application. Although the present application is described in detail with reference to the foregoing embodiments, a person of ordinary skill in the art is to understand that modifications may still be made to the technical solutions described in the foregoing embodiments or make equivalent replacements to some technical features thereof, and these modifications or replacements will not cause the essence of corresponding technical solutions to depart from the scope of the technical solutions in the embodiments of the present application.

## Claims

1. A configuration management method for an on-card configuration characteristic, applied to an electronic device, wherein the electronic device comprises an application processor AP and a modem processor Modem, and the method comprises:
obtaining (S107), by the AP of the electronic device, a configuration state of a first on-card configuration characteristic on the Modem side in response to a state of inserting a SIM card, wherein the configuration state is a first state, and wherein the first on-card configuration characteristic is whether an enhanced voice service EVS encoding mode is supported and is related to a core network service capability
obtaining, by the AP, an expected state of the first on-card configuration characteristic stored on the AP side, wherein the expected state specifies whether the EVS encoding mode on-card configuration characteristic is supported, the expected state is obtained by the AP by querying based on system version information and/or area information of the electronic device, and the expected state is a second state; and wherein the area information is usage areas set in the electronic device or areas in which the electronic device is located; and
when the first state is inconsistent with the second state, indicating (S109), by the AP, the Modem to adjust the configuration state of the first on-card configuration characteristic to the second state, wherein the configuration state of the first on-card configuration characteristic indicates electronic device capability information that needs to be reported to a network side;
wherein in response to a user operation received, determining, by the electronic device, capability information based on the second state, and reporting the capability information to the network side, wherein the user operation is used for initiating a first core network service.

2. The method according to claim 1, wherein the obtaining, by the AP, a configuration state of a first on-card configuration characteristic on the Modem side comprises:
obtaining, by the AP, the configuration state of the first on-card configuration characteristic from an XmL file on the Modem side.

3. The method according to claim 1, wherein the electronic device is a dual-card device, and the Modem comprises a first Modem and a second Modem; and
the method comprises:
obtaining, by the AP, a first configuration state of the first on-card configuration characteristic on the first Modem side in response to a state of inserting a first SIM card for the first Modem, wherein the first configuration state is the first state, and when the first state is inconsistent with the second state, indicating the first Modem to adjust the first configuration state to the second state; and
obtaining, by the AP, a second configuration state of the first on-card configuration characteristic on the second Modem side in response to a state of inserting a second SIM card for the second Modem, wherein the second configuration state is the first state, and when the first state is inconsistent with the second state, indicating the second Modem to adjust the second configuration state to the second state.

4. An electronic device (100), comprising:
a plurality of processors (110), wherein the processor comprises an application processor AP and a modem processor Modem;
a memory (120, 121); and
one or more computer programs, wherein the one or more computer programs are stored in the memory, and when the computer programs are executed by the one or more processors, the electronic device is enabled to perform the method of any one of claims 1 to 3.

5. A chip, wherein the chip comprises a processing circuit and a transceiver pin, wherein
the transceiver pin and the processing circuit communicate with each other via an internal connection path; and
the processing circuit performs the configuration management method for an on-card configuration characteristic according to any one of claims 1 to 3, to control a receive pin to receive a signal, and control a send pin to send a signal.

6. A computer-readable storage medium, comprising a computer program, wherein when the computer program is run on an electronic device, the electronic device is enabled to perform the configuration management method for an on-card configuration characteristic according to any one of claims 1 to 3.

## Patentansprüche

1. Konfigurationsverwaltungsverfahren für eine kartenbasierte Konfigurationseigenschaft, das auf eine elektronische Vorrichtung angewendet wird, wobei die elektronische Vorrichtung einen Anwendungsprozessor AP und einen Modemprozessor Modem umfasst und das Verfahren umfasst:
Erhalten (S107), durch den AP der elektronischen Vorrichtung, eines Konfigurationszustands einer ersten kartenbasierten Konfigurationseigenschaft auf der Modemseite als Reaktion auf einen Zustand des Einsetzens einer SIM-Karte, wobei der Konfigurationszustand ein erster Zustand ist und wobei die erste kartenbasierte Konfigurationseigenschaft angibt, ob ein Enhanced-Voice-Service-, EVS-, Codierungsmodus unterstützt wird, und sich auf eine Kernnetzwerk-Dienstfähigkeit bezieht;
Erhalten, durch den AP, eines auf der AP-Seite gespeicherten erwarteten Zustands der ersten kartenbasierten Konfigurationseigenschaft, wobei der erwartete Zustand spezifiziert, ob die kartenbasierte Konfigurationseigenschaft des EVS-Codierungsmodus unterstützt wird, der erwartete Zustand durch den AP durch Abfragen basierend auf Systemversionsinformationen und/oder Gebietsinformationen der elektronischen Vorrichtung erhalten wird und der erwartete Zustand ein zweiter Zustand ist; und wobei die Gebietsinformationen in der elektronischen Vorrichtung eingestellte Nutzungsgebiete oder Gebiete sind, in denen sich die elektronische Vorrichtung befindet; und
wenn der erste Zustand nicht mit dem zweiten Zustand übereinstimmt, Anweisen (S109), durch den AP, des Modems, den Konfigurationszustand der ersten kartenbasierten Konfigurationseigenschaft auf den zweiten Zustand anzupassen, wobei der Konfigurationszustand der ersten kartenbasierten Konfigurationseigenschaft Fähigkeiteninformationen der elektronischen Vorrichtung angibt, die an eine Netzwerkseite gemeldet werden müssen;
wobei als Reaktion auf eine empfangene Benutzerbedienung die elektronische Vorrichtung Fähigkeiteninformationen basierend auf dem zweiten Zustand bestimmt und die Fähigkeiteninformationen an die Netzwerkseite meldet, wobei die Benutzerbedienung zum Initiieren eines ersten Kernnetzwerkdienstes verwendet wird.

2. Verfahren nach Anspruch 1, wobei das Erhalten, durch den AP, eines Konfigurationszustands einer ersten kartenbasierten Konfigurationseigenschaft auf der Modemseite umfasst:
Erhalten, durch den AP, des Konfigurationszustands der ersten kartenbasierten Konfigurationseigenschaft aus einer XML-Datei auf der Modemseite.

3. Verfahren nach Anspruch 1, wobei die elektronische Vorrichtung eine Doppelkarten-Vorrichtung ist und das Modem ein erstes Modem und ein zweites Modem umfasst; und
das Verfahren umfasst:
Erhalten, durch den AP, eines ersten Konfigurationszustands der ersten kartenbasierten Konfigurationseigenschaft auf der ersten Modemseite als Reaktion auf einen Zustand des Einsetzens einer ersten SIM-Karte für das erste Modem, wobei der erste Konfigurationszustand der erste Zustand ist, und wenn der erste Zustand nicht mit dem zweiten Zustand übereinstimmt, Anweisen des ersten Modems, den ersten Konfigurationszustand auf den zweiten Zustand anzupassen; und
Erhalten, durch den AP, eines zweiten Konfigurationszustands der ersten kartenbasierten Konfigurationseigenschaft auf der zweiten Modemseite als Reaktion auf einen Zustand des Einsetzens einer zweiten SIM-Karte für das zweite Modem, wobei der zweite Konfigurationszustand der erste Zustand ist, und wenn der erste Zustand nicht mit dem zweiten Zustand übereinstimmt, Anweisen des zweiten Modems, den zweiten Konfigurationszustand auf den zweiten Zustand anzupassen.

4. Elektronische Vorrichtung (100), umfassend:
eine Vielzahl von Prozessoren (110), wobei die Prozessoren einen Anwendungsprozessor AP und einen Modemprozessor Modem umfassen;
einen Speicher (120, 121); und
ein oder mehrere Computerprogramme, wobei das eine oder die mehreren Computerprogramme in dem Speicher gespeichert sind und, wenn die Computerprogramme von dem einen oder den mehreren Prozessoren ausgeführt werden, die elektronische Vorrichtung dazu befähigt wird, das Verfahren nach einem der Ansprüche 1 bis 3 durchzuführen.

5. Chip, wobei der Chip eine Verarbeitungsschaltung und einen Sendeempfänger-Pin umfasst, wobei
der Sendeempfänger-Pin und die Verarbeitungsschaltung über einen internen Verbindungsweg miteinander kommunizieren; und
die Verarbeitungsschaltung das Konfigurationsverwaltungsverfahren für eine kartenbasierte Konfigurationseigenschaft nach einem der Ansprüche 1 bis 3 durchführt, um einen Empfangspin zum Empfangen eines Signals zu steuern und einen Sendepin zum Senden eines Signals zu steuern.

6. Computerlesbares Speichermedium, umfassend ein Computerprogramm, wobei, wenn das Computerprogramm auf einer elektronischen Vorrichtung ausgeführt wird, die elektronische Vorrichtung dazu befähigt wird, das Konfigurationsverwaltungsverfahren für eine kartenbasierte Konfigurationseigenschaft nach einem der Ansprüche 1 bis 3 durchzuführen.

## Revendications

1. Procédé de gestion de configuration pour une caractéristique de configuration sur carte, appliqué à un dispositif électronique, dans lequel le dispositif électronique comprend un processeur d'application AP et un processeur de modem Modem, et le procédé comprend :
l'obtention (S107), par l'AP du dispositif électronique, d'un état de configuration d'une première caractéristique de configuration sur carte du côté Modem en réponse à un état d'insertion d'une carte SIM, dans lequel l'état de configuration est un premier état, et dans lequel la première caractéristique de configuration sur carte indique si un mode de codage de service vocal amélioré, EVS, est pris en charge et est liée à une capacité de service de réseau central ;
l'obtention, par l'AP, d'un état attendu de la première caractéristique de configuration sur carte stocké du côté AP, dans lequel l'état attendu spécifie si la caractéristique de configuration sur carte de mode de codage EVS est prise en charge, l'état attendu est obtenu par l'AP par interrogation sur la base d'informations de version de système et/ou d'informations de zone du dispositif électronique, et l'état attendu est un second état ; et dans lequel les informations de zone sont des zones d'utilisation définies dans le dispositif électronique ou des zones dans lesquelles le dispositif électronique est situé ; et
lorsque le premier état n'est pas cohérent avec le second état, l'indication (S109), par l'AP, au Modem d'ajuster l'état de configuration de la première caractéristique de configuration sur carte au second état, dans lequel l'état de configuration de la première caractéristique de configuration sur carte indique des informations de capacité de dispositif électronique qui doivent être rapportées à un côté réseau ;
dans lequel, en réponse à une opération d'utilisateur reçue, le dispositif électronique détermine des informations de capacité sur la base du second état, et rapporte les informations de capacité au côté réseau, dans lequel l'opération d'utilisateur est utilisée pour initier un premier service de réseau central.

2. Procédé selon la revendication 1, dans lequel l'obtention, par l'AP, d'un état de configuration d'une première caractéristique de configuration sur carte du côté Modem comprend :
l'obtention, par l'AP, de l'état de configuration de la première caractéristique de configuration sur carte à partir d'un fichier XML du côté Modem.

3. Procédé selon la revendication 1, dans lequel le dispositif électronique est un dispositif à double carte, et le Modem comprend un premier Modem et un second Modem ; et
le procédé comprend :
l'obtention, par l'AP, d'un premier état de configuration de la première caractéristique de configuration sur carte du côté premier Modem en réponse à un état d'insertion d'une première carte SIM pour le premier Modem, dans lequel le premier état de configuration est le premier état, et lorsque le premier état n'est pas cohérent avec le second état, l'indication au premier Modem d'ajuster le premier état de configuration au second état ; et
l'obtention, par l'AP, d'un second état de configuration de la première caractéristique de configuration sur carte du côté second Modem en réponse à un état d'insertion d'une seconde carte SIM pour le second Modem, dans lequel le second état de configuration est le premier état, et lorsque le premier état n'est pas cohérent avec le second état, l'indication au second Modem d'ajuster le second état de configuration au second état.

4. Dispositif électronique (100), comprenant :
une pluralité de processeurs (110), dans lequel les processeurs comprennent un processeur d'application AP et un processeur de modem Modem ;
une mémoire (120, 121) ; et
un ou plusieurs programmes informatiques, dans lequel les un ou plusieurs programmes informatiques sont stockés dans la mémoire, et lorsque les programmes informatiques sont exécutés par les un ou plusieurs processeurs, le dispositif électronique est rendu capable d'exécuter le procédé selon l'une quelconque des revendications 1 à 3.

5. Puce, dans laquelle la puce comprend un circuit de traitement et une broche d'émetteur-récepteur, dans laquelle
la broche d'émetteur-récepteur et le circuit de traitement communiquent entre eux par l'intermédiaire d'un chemin de connexion interne ; et
le circuit de traitement exécute le procédé de gestion de configuration pour une caractéristique de configuration sur carte selon l'une quelconque des revendications 1 à 3, pour commander une broche de réception afin de recevoir un signal, et commander une broche d'émission afin d'envoyer un signal.

6. Support de stockage lisible par ordinateur, comprenant un programme informatique, dans lequel, lorsque le programme informatique est exécuté sur un dispositif électronique, le dispositif électronique est rendu capable d'exécuter le procédé de gestion de configuration pour une caractéristique de configuration sur carte selon l'une quelconque des revendications 1 à 3.
